(19) **Europäisches Patentamt / European Patent Office / Office européen des brevets**

(11) **EP 4 203 105 A1**

(12) **EUROPEAN PATENT APPLICATION**
published in accordance with Art. 153(4) EPC

(43) Date of publication:
**28.06.2023 Bulletin 2023/26**

(21) Application number: **21861148.1**

(22) Date of filing: **03.08.2021**

(51) International Patent Classification (IPC):
**H01M 4/525** $^{(2010.01)}$     **H01M 4/36** $^{(2006.01)}$
**H01M 4/505** $^{(2010.01)}$

(52) Cooperative Patent Classification (CPC):
**H01M 4/36; H01M 4/505; H01M 4/525;** Y02E 60/10

(86) International application number:
**PCT/JP2021/028730**

(87) International publication number:
**WO 2022/044720 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2020 JP 2020141233**

(71) Applicant: SUMITOMO CHEMICAL COMPANY, LIMITED
**Tokyo 103-6020 (JP)**

(72) Inventors:
• **TACHIBANA, Shingo**
  **Niihama-shi, Ehime 792-8521 (JP)**
• **KURODA, Tomoya**
  **Fukui-shi, Fukui 910-3131 (JP)**

(74) Representative: **Vossius & Partner**
**Patentanwälte Rechtsanwälte mbB**
**Siebertstraße 3**
**81675 München (DE)**

(54) **POSITIVE ELECTRODE ACTIVE MATERIAL FOR LITHIUM SECONDARY BATTERIES, POSITIVE ELECTRODE FOR LITHIUM SECONDARY BATTERIES, AND LITHIUM SECONDARY BATTERY**

(57)     A positive electrode active material for a lithium secondary battery, containing at least Li, Ni, an element X, and a carbon atom, in which the element X is one or more elements selected from the group consisting of Al, Ti, Nb, B, W, Zr, Mg, Sn, and P, and (1) and (2) are satisfied.

$$(1)\ C_x/C_y \leq 10$$

$$(2)\ 0 < (C_y/C_z) \leq 100$$

(In (1) or (2), Cx is an abundance (mass%) of the element X obtained by measurement using X-ray photoelectron spectroscopy. Cy is an abundance (mass%) of the carbon atom obtained from a C1s spectrum obtained by measurement using the X-ray photoelectron spectroscopy. Cz is an abundance (mass%) of the carbon atom obtained by measurement using a combustion-infrared absorption method.)

EP 4 203 105 A1

**Description**

[Technical Field]

The present invention relates to a positive electrode active material for lithium secondary battery, a positive electrode for lithium secondary battery, and a lithium secondary battery.
Priority is claimed on Japanese Patent Application No. 2020-141233, filed in Japan on August 24, 2020, the content of which is incorporated herein by reference.

[Background Art]

Lithium metal composite oxides are being used as positive electrode active materials for lithium secondary battery. Attempts of putting lithium secondary battery into practical use not only for small-sized power sources in mobile phone applications, notebook personal computer applications, and the like but also for medium-sized or large-sized power sources in automotive applications, power storage applications, and the like have already been underway.
At the time of producing a positive electrode active material for a lithium secondary battery, there are cases where a carbon atom remains in the positive electrode active material for a lithium secondary battery to be obtained. This is because a compound having a carbon atom derived from a raw material that is used during the production remains in the positive electrode active material for a lithium secondary battery. As the compound having a carbon atom, for example, lithium carbonate is an exemplary example.
When a large amount of the compound having a carbon atom remains on the outsides of particles (particularly on the surface of the particles) contained in the positive electrode active material for a lithium secondary battery, there are cases where the compound having a carbon atom is decomposed during a discharge reaction to generate gas. In addition, when the compound having a carbon atom comes into contact with an electrolyte solution, there are cases where the electrolyte solution decomposes to generate gas. The generated gas acts as a cause of deterioration of the battery characteristics.
In order to suppress such deterioration of the battery characteristics, studies are underway regarding a method in which a lithium metal composite oxide contained in the positive electrode active material for a lithium secondary battery is coated with a metal or metal oxide.
For example, Patent Document 1 describes that a compound containing tungsten and lithium is provided on the surfaces of lithium-nickel composite oxide particles. Furthermore, Patent Document 1 describes that the amount of lithium carbonate present on the surfaces of the lithium-nickel composite oxide particles is limited.

[Citation List]

[Patent Document]

[Patent Document 1]
JP-A-2017-134996

[Summary of Invention]

[Technical Problem]

Incidentally, there is a demand for a positive electrode active material for a lithium secondary battery having a high initial discharge capacity and capable of improve cycle characteristics even when a carbon atom remains in the positive electrode active material for a lithium secondary battery.
An objective of the present invention is to provides a positive electrode active material for a lithium secondary battery having a high initial discharge capacity and excellent cycle characteristics even when a carbon atom remains in the positive electrode active material for a lithium secondary battery, a positive electrode for a lithium secondary battery containing this positive electrode active material for a lithium secondary battery, and a lithium secondary battery.
In the present specification, "high initial discharge capacity" means that the value of the initial discharge capacity measured by a method to be described below is 160 mAh/g or more. Furthermore, "excellent cycle characteristics" means that the value of the cycle retention rate measured by the method described below is 72% or more.

[Solution to Problem]

The present invention includes [1] to [15].

[1] A positive electrode active material for a lithium secondary battery, containing at least Li, Ni, an element X, and a carbon atom, in which the element X is one or more elements selected from the group consisting of Al, Ti, Nb, B, W, Zr, Mg, Sn, and P, and (1) and (2) are satisfied.

$$(1)\ Cx/Cy \leq 10$$

$$(2)\ 0 < (Cy/Cz) \leq 100$$

(In (1) or (2), Cx is an abundance (mass%) of the element X obtained by measurement using X-ray photoelectron spectroscopy. Cy is an abundance (mass%) of the carbon atom obtained from a C1s spectrum obtained by measurement using the X-ray photoelectron spectroscopy. Cz is an abundance (mass%) of the carbon atom obtained by measurement using a combustion-infrared absorption method.)

[2] A positive electrode active material for a lithium secondary battery, containing at least Li, Ni, an element X, and a carbon atom, in which the element X is one or more elements selected from the group consisting of Al, Ti, Nb, B, W, Zr, Mg, Sn, and P, and (1) and (3) are satisfied.

$$(1)\ Cx/Cy \leq 10$$

$$(3)\ 0 < (Cy/Cz) \leq 500$$

(In (1) or (3),

Cx is an abundance (mass%) of the element X obtained by measurement using X-ray photoelectron spectroscopy.
Cy is an abundance (mass%) of the carbon atom obtained from a C1s spectrum obtained by measurement using the X-ray photoelectron spectroscopy.
Cz is an abundance (mass%) of the carbon atom obtained by measurement using a combustion-infrared absorption method.)

[3] The positive electrode active material for the lithium secondary battery according to [1] or [2], in which the Cy is $0 < Cy < 50$.

[4] The positive electrode active material for the lithium secondary battery according to any one of [1] to [3], in which the Cz is $0 < Cz \leq 2$.

[5] The positive electrode active material for the lithium secondary battery according to any one of [1] to [4], in which the Cz is $0 < Cz \leq 0.4$.

[6] The positive electrode active material for the lithium secondary battery according to any one of [1] to [5], in which the Cx is $0 < Cx \leq 95$.

[7] The positive electrode active material for the lithium secondary battery according to any one of [1] to [6], that is represented by composition formula (I) and further contains a carbon atom.

$$Li[Li_m(Ni_{(1-n-p)}X_nM_p)_{1-m}]O_2 \dots \qquad (I)$$

(Here, $-0.1 \leq m \leq 0.2$, $0 < p < 0.6$, and $0 < n \leq 0.2$ are satisfied. An element M is one or more elements selected from the group consisting of Co, Mn, Fe, Cu, Mo, Zn, Ga, and V.)

[8] The positive electrode active material for the lithium secondary battery according to any one of [1] to [7], in which the positive electrode active material for the lithium secondary battery contains a lithium metal composite oxide and a composite phase, the lithium metal composite oxide contains Li, Ni, and one or more elements selected from the group consisting of an element M and Al, and the composite phase contains the element X. Here, the element M is one or more elements selected from the group consisting of Co, Mn, Fe, Cu, Mo, Zn, Ga, and V.

[9] The positive electrode active material for the lithium secondary battery according to any one of [1] to [8], in which a BET specific surface area is 2.0 m$^2$/g or less.

[10] A positive electrode for the lithium secondary battery, containing the positive electrode active material for the lithium secondary battery according to any one of [1] to [9].

[11] A lithium secondary battery having the positive electrode for the lithium secondary battery according to [10].

[12] A method for producing a positive electrode active material for a lithium secondary battery, including step (a), step (b), and step (c) in this order.

Step (a): A step of mixing and calcining a metal composite compound containing at least Ni and a lithium compound to obtain a lithium metal composite oxide.

Step (b): A step of mixing the lithium metal composite oxide and a compound containing an element X in proportions at which a proportion of a mole amount of the element X in a total mole amount of metal elements other than a lithium atom contained in the lithium metal composite oxide becomes 1.0 mol% or more and 5.5 mol% or less to obtain a mixture. The element X is one or more elements selected from the group consisting of Al, Ti, Nb, B, W, Zr, Mg, Sn, and P, and a 50% cumulative volume particle diameter $D_{50}$ ($\mu$m) of the compound containing the element X is 0.02 $\mu$m or more and 90 $\mu$m or less.

Step (c): A step of thermally treating the mixture at a temperature of 200°C or higher and 600°C or lower in an oxygen-containing atmosphere.

[13] The method for producing a positive electrode active material for the lithium secondary battery according to [12], in which the step (a) has a step of mixing and calcining the metal composite compound and the lithium compound and crushing an obtained calcined product with a millstone-type crusher.

[14] The method for producing the positive electrode active material for the lithium secondary battery according to [12] or [13], in which the step (b) has a step of mixing a coating raw material containing the element X and the lithium metal composite oxide in an atmosphere containing water or water and carbon dioxide.

[15] The method for producing the positive electrode active material for the lithium secondary battery according to any one of [12] to [14], in which the step (b) has a step of mixing a coating raw material containing the element X and the lithium metal composite oxide and holding a mixture in an atmosphere containing water or water and carbon dioxide after the mixing.

[Advantageous Effects of Invention]

According to the present invention, it is possible to provides a positive electrode active material for a lithium secondary battery having a high initial discharge capacity and excellent cycle characteristics even when a carbon atom remains in the positive electrode active material for a lithium secondary battery, a positive electrode for a lithium secondary battery, and a lithium secondary battery.

[Brief Description of Drawings]

FIG. 1A is a schematic configuration view showing an example of a lithium secondary battery.
FIG. 1B is a schematic configuration view showing the example of the lithium secondary battery.
FIG. 2 is a schematic view showing a laminate that an all-solid-state lithium-ion secondary battery includes.
FIG. 3 is a schematic view showing an entire configuration of the all-solid-state lithium-ion secondary battery.

[Description of Embodiments]

In the present specification, a metal composite compound will be referred to as "MCC" as an abbreviation in some cases.

In the present specification, a positive electrode active material for a lithium secondary battery will be referred to as "CAM" as an abbreviation for cathode active material for lithium secondary battery in some cases.

In the present specification, lithium metal composite oxide will be referred to as "LiMO" as an abbreviation in some cases.

<Positive electrode active material for lithium secondary battery>

CAM of the present embodiment contain at least Li, Ni, an element X, and a carbon atom. The element X is one or more elements selected from the group consisting of Al, Ti, Nb, B, W, Zr, Mg, Sn, and P.

In the present specification, Ni refers not to a nickel metal but to a nickel atom, and Co, Al, Li, and the like also, similarly, each refer to a cobalt atom, an aluminum atom, a lithium atom, or the like.

The carbon atom contained in CAM of the present embodiment is preferably derived from a compound having a carbon atom such as lithium carbonate, lithium hydrogen carbonate, an organic lithium compound, or hydrocarbon.

The compound having a carbon atom is a compound contained in a raw material that is used at the time of producing CAM or a compound obtained by a reaction at the time of producing CAM.

CAM of the present embodiment preferably has the carbon atom present on the surface or preferably has carbon atoms present on the surface and inside, and LiMO contained in the CAM preferably has a carbon atom present on the surface or preferably has carbon atoms present on the surface and inside.

In the present embodiment, CAM is a powder.

In the present embodiment, "X-ray photoelectron spectroscopy" will be referred to as "XPS".

According to XPS, it is possible to analyze a configuration element or electronic state on the surface portions of the particles contained in CAM by measuring the energies of photoelectrons that are generated when the surfaces of the particles in CAM are irradiated with X-rays. The binding energies of photoelectrons that are emitted from the surfaces of the particles of CAM when irradiated with AlKu rays as excitation X-rays are analyzed. According to XPS, it is possible to analyze the surface state of the particles contained in CAM.

[X-ray photoelectron spectroscopic analysis]

As an X-ray photoelectron spectrometer that is used for measurement by XPS, specifically, K-Alpha manufactured by Thermo Fisher Scientific Inc. can be used.

Specifically, the spectrum of C1s and the spectrum of the element X are measured. $AlK\alpha$ rays are used as the X-ray source, and a flood gun (accelerating voltage: 0.3 V, current: 100 $\mu$A) is used for charge neutralization at the time of measurement.

The spectral peak of the element X is the spectral peak of each element of aluminum 2p, titanium 2p, niobium 3d, boron 1s, tungsten 4f, zirconium 3d, magnesium 2p, tin 3d, and phosphorus 2p.

As the measurement conditions, the spot size is set to 400 $\mu$m, the pass energy is set to 50 eV, the step is set to 0.1 eV, and the dwell time is set to 500 ms. Regarding the obtained XPS spectra, peak areas to be described below are calculated using an Avantage data system of Thermo Fisher Scientific Inc. Charge correction is performed on a peak belonging to surface-contaminated hydrocarbons in a C1s spectrum to 284.6 eV.

«Cx, Cy, and Cz»

The abundance (mass%) of the element X that is obtained by measurement using XPS, that is, the abundance (mass%) of the element X obtained based on the spectral peak area of the element X obtained at the time of measuring CAM by XPS is indicated by Cx.

The spectral peaks of the element X are aluminum 2p, titanium 2p, niobium 3d, boron 1s, tungsten 4f, zirconium 3d, magnesium 2p, tin 3d, and phosphorus 2p.

The measurement conditions for XPS need to be appropriately adjusted to conditions under which a number of particles contained in CAM can be measured. As an example, conditions such as an X-ray irradiation diameter of 400 $\mu$m, a pass energy of 50 eV, a step of 0.1 eV, and a dwelltime of 500 ms are exemplary examples.

Regarding XPS spectra to be obtained, the spectral peak area of the element X is calculated using an Avantage data system of Thermo Fisher Scientific Inc., and the abundance of the element X is calculated based on this. In the present embodiment, charge correction is performed with the C1s peak set to 284.6 eV

According to XPS, it is possible to measure the abundance of the element X in the surface region of particles present in a range irradiated with X-rays. The total value of the abundances of the element X in the surface regions of the particles, which are present in the range irradiated with X-rays, becomes the measurement value.

The abundance (mass%) of the carbon atom obtained from the C1s spectrum obtained by measurement using X-ray photoelectron spectroscopy, that is, the abundance (mass%) of the carbon atom obtained based on the peak area where the binding energy has the peak top at 290 $\pm$ 5 eV in the C1s spectrum obtained at the time of measuring CAM by XPS is indicated by Cy. The peak of the binding energy at 290 $\pm$ 5 eV indicates the presence of a carbon atom derived from ($-CO_3$).

According to XPS, it is possible to measure the abundance of the carbon atom in the surface region of particles present in a range irradiated with X-rays. The total value of the abundances of the carbon atoms in the surface regions of the particles, which are present in the range irradiated with X-rays, becomes the measurement value.

In the present embodiment, the abundance (mass%) of the carbon atom obtained at the time of measuring CAM by a combustion-infrared absorption method is indicated by Cz. In the combustion-infrared absorption method, measurement is performed by the following method. According to the combustion-infrared absorption method, the abundance of carbon atoms contained in all of the particles of CAM can be measured.

The combustion-infrared absorption method is performed by heating and combusting CAM to a predetermined temperature in an oxygen stream in a tubular electric resistance furnace. A carbon-containing gas component such as carbon dioxide or carbon monoxide, which is generated by the combustion, is measured with an infrared detector, and the abundance of carbon contained in all of the particles of CAM can be measured.

As a device used for the combustion-infrared absorption method, specifically, EMIA-810W (manufactured by Horiba, Ltd.) can be used.

In CAM, Cx, Cy, and Cz satisfy the following (1) and (2).

$$(1)\ Cx/Cy \leq 10$$

$$(2)\ 0 < (Cy/Cz) \leq 100$$

[(1)] The value of "Cx" is the abundance (mass%) of the element X in the surface regions of the particles contained in CAM.

The value of "Cy" is the abundance (mass%) of the carbon atoms in the surface regions of the particles contained in CAM.

The value of "Cx/Cy" means the ratio of the abundance (mass%) of the element X to the carbon atoms in the surface regions of the particles contained in CAM.

When the value of "Cx/Cy" is 10 or less, it is possible to assume that an ion conductive phase is formed in the surface regions of the particles contained in CAM. The "ion conductive phase" is a phase that urges the migration of lithium ions and contains the carbon atoms and the element X. When the ion conductive phase is formed on the surface regions of the particles contained in CAM, the initial discharge capacities of batteries are likely to increase, and the cycle characteristics are likely to be improved.

On the other hand, when the value of "Cx/Cy" exceeds 10, it is possible to assume that a resistance phase that inhibits the migration of lithium ions is likely to be formed in the surface regions of the particles contained in CAM. In this case, the initial discharge capacities of batteries to be produced are likely to decrease, and the cycle characteristics are also likely to become poor.

Here, the surface region of the particle contained in CAM refers to a region where a configuration element or the electronic state can be analyzed by XPS measurement. Specifically, the surface region refers to a region from the outermost surface to a depth where measurement by XPS is possible in a direction from the outermost surface toward the center of the particle.

"Cx/Cy" is preferably 9.5 or less, more preferably 9.0 or less, and particularly preferably 8.5 or less. As the lower limit value of "Cx/Cy", for example, 0.10 or more, 0.15 or more, and 0.20 or more are exemplary examples.

The upper limit value and the lower limit value of "Cx/Cy" can be randomly combined. As examples of the combination, "Cx/Cy" of 0.10 or more and 10 or less, 0.15 or more and 9.5 or less, 0.20 or more and 9.0 or less, and 0.20 or more and 8.5 or less are exemplary examples.

[(2)] The value of "Cz" is the abundance (mass%) of the carbon atoms in all of the particles contained in CAM.

The value of "Cy/Cz" means the ratio of the abundance (mass%) of the carbon atoms in the surface regions of the particles contained in CAM to the abundance (mass%) of the carbon atoms in all of the particles contained in CAM.

As the value of "Cy/Cz" becomes smaller, the abundance of the carbon atoms in the surface regions of the particles contained in CAM to the abundance of the carbon atoms inside the particles contained in CAM becomes smaller. When the value of "Cy/Cz" is 100 or less, it is possible to assume that the abundance of the carbon atoms in the surface regions of the particles contained in CAM is sufficiently small. Therefore, the generation of gas by the decomposition of an electrolyte solution in a reaction between the compound having a carbon atom and the electrolyte solution is less likely to occur. As a result, the cycle characteristics of batteries are less likely to deteriorate.

"Cy/Cz" is preferably 80 or less and more preferably 60 or less. As the lower limit value of "Cy/Cz", for example, 1.0 or more, 2.5 or more, 5.0 or more, and 5.3 or more are exemplary examples.

The upper limit value and the lower limit value of "Cy/Cz" can be randomly combined. As examples of the combination, "Cy/Cz" of 1.0 or more and 80 or less, 2.5 or more and 70 or less, 5.0 or more and 60 or less, and 5.3 or more and 60 or less are exemplary examples.

In CAM that satisfies (1) and (2), the above-described ion conductive phase is sufficiently formed in the surface regions of the particles, and thus it is possible to increase the initial discharge capacities of batteries to be produced and to improve the cycle characteristics.

In CAM of one embodiment of the present invention, Cx, Cy, and Cz satisfy (1) and (3) below.

$$(3)\ 0 < (Cy/Cz) \leq 500$$

(In (3), Cy is an abundance (mass%) of the carbon atom obtained from a C1s spectrum obtained by measurement using the X-ray photoelectron spectroscopy.

Cz is an abundance (mass%) of the carbon atom obtained by measurement using a combustion-infrared absorption method.)

[(3)] The descriptions of Cy and Cz are the same as those of Cy and Cz in (2).

When the value of "Cy/Cz" is 500 or less, it is possible to assume that the abundance of the carbon atoms in the surface regions of the particles contained in CAM is sufficiently small. Therefore, the generation of gas by the decomposition of an electrolyte solution in a reaction between the compound having a carbon atom and the electrolyte solution is less likely to occur. As a result, the cycle characteristics of batteries are less likely to deteriorate.

"Cy/Cz" is preferably 400 or less, more preferably 375 or less, and still more preferably 350 or less. As the lower limit value of "Cy/Cz", for example, 5.0 or more, 10 or more, 20 or more, and 25 or more are exemplary examples.

The upper limit value and the lower limit value of "Cy/Cz" can be randomly combined. As examples of the combination, "Cy/Cz" of 5.0 or more and 400 or less, 10 or more and 375 or less, 20 or more and 350 or less, and 25 or more and 350 or less are exemplary examples.

In CAM that satisfies (1) and (3), the above-described ion conductive phase is sufficiently formed in the surface regions of the particles, and thus it is possible to increase the initial discharge capacities of batteries to be produced and to improve the cycle characteristics.

Cx is preferably $0 < Cx \leq 95$. In addition, Cx is preferably 0.1 or more, more preferably 2.5 or more, and still more preferably 5.0 or more. Cx is preferably 85 or less, more preferably 75 or less, and still more preferably 65 or less.

The upper limit value and lower limit value of Cx can be randomly combined together.

As the combination, Cx's of 0.1 or more and 85 or less, 2.5 or more and 75 or less, and 5.0 or more and 65 or less are exemplary examples.

Cy is preferably $0 < Cy \leq 50$. In addition, Cy is preferably 1.0 or more, more preferably 2.0 or more, still more preferably 3.0 or more, and particularly preferably 4.6 or more. Cy is preferably 48 or less, more preferably 45 or less, and still more preferably 40 or less.

The upper limit value and lower limit value of Cy can be randomly combined together.

As examples of the combination, Cy of 1.0 or more and 48 or less, 2.0 or more and 45 or less, 3.0 or more and 40 or less, and 4.6 or more and 40 or less are exemplary examples.

Cz is preferably $0 < Cz \leq 2$. In addition, Cz is preferably 0.1 or more, more preferably 0.15 or more, and still more preferably 0.25 or more. Cz is preferably 2.0 or less, more preferably 1.8 or less, still more preferably 1.6 or less, and particularly preferably 1.5 or less.

The upper limit value and lower limit value of Cz can be randomly combined together.

As examples of the combination, Cz of more than 0 and 2.0 or less, 0.1 or more and 1.8 or less, 0.15 or more and 1.6 or less, and 0.25 or more and 1.5 or less are exemplary examples.

In one embodiment of the present invention, Cz is preferably $0 < Cz \leq 0.4$. In addition, Cz is preferably 0.01 or more, more preferably 0.03 or more, and still more preferably 0.05 or more. Cz is preferably 0.4 or less, more preferably 0.38 or less, still more preferably 0.35 or less, and particularly preferably 0.3 or less.

The upper limit value and lower limit value of Cz can be randomly combined together.

As examples of the combination, Cz of more than 0 and 0.4 or less, 0.01 or more and 0.38 or less, 0.03 or more and 0.35 or less, and 0.05 or more and 0.3 or less are exemplary examples.

When Cx, Cy, or Cz is within the above-described ranges, it is possible to further increase the initial discharge capacities of batteries to be produced and to improve the cycle characteristics.

CAM preferably contains LiMO and a composite phase. In addition, CAM particularly preferably contains the composite phase in the surface region of LiMO. The surface region of LiMO may be covered with the composite phase, or the composite phase may be scattered in a part of the surface region of LiMO and a part of the surface of LiMO may be exposed.

The "surface region of LiMO" refers to the outermost surface of the particle of LiMO and a region from the outermost surface to a depth of approximately 10 nm toward the center of the particle.

As the composite phase, a lithium ion conductive phase is an exemplary example.

The composite phase has a composition different from that of CAM, and, for example, a composite metal oxide containing Li and the element X, but not containing the element M and the like can be exemplary examples.

The composite phase is conceivable to be represented by the sum of the ion conductive phase and a resistance phase. As described above, when the value of "Cx/Cy" is 10 or less, since the ion conductive phase is likely to be formed in the surface regions of the particles contained in CAM, the contribution of the ion conductive phase becomes large, and the composite phase behaves as an ion conductive phase.

On the other hand, when the value of "Cx/Cy" exceeds 10, since a resistance phase that inhibits the migration of lithium ions is likely to be formed in the surface regions of the particles contained in CAM, the contribution of the resistance phase becomes large, and the composite phase behaves as a resistance phase.

LiMO preferably contains at least a lithium atom, Ni, and one or more elements selected from the group consisting of the element M and Al. The element M is one or more elements selected from the group consisting of Co, Mn, Fe, Cu, Mo, Zn, Ga, and V. In addition, the composite phase preferably contains the element X and preferably contains the element X and a carbon atom.

CAM comprising LiMO and the composite phase is represented by the following composition formula (I) and preferably further contains a carbon atom.

$$Li[Li_m(Ni_{(1-n-p)}X_nM_p)_{1-m}]O_2 ... \qquad (I)$$

(where $-0.1 \leq m \leq 0.2$, $0 < p < 0.6$, and $0 < n \leq 0.2$. An element M is one or more elements selected from the group consisting of Co, Mn, Fe, Cu, Mo, Zn, Ga, and V.)

In the composition formula (I), m is preferably -0.001 or more, more preferably -0.0015 or more, and particularly preferably -0.002 or more from the viewpoint of improving cycle characteristics. In addition, from the viewpoint of obtaining lithium secondary battery having a high discharge rate characteristic, m is preferably 0.1 or less, more preferably 0.08 or less, and particularly preferably 0.06 or less.

The upper limit value and lower limit value of m can be randomly combined together.

m is preferably $-0.001 \leq m \leq 0.1$ and more preferably $-0.002 \leq m \leq 0.06$.

In the composition formula (I), from the viewpoint of obtaining lithium secondary battery having high discharge rate characteristics, $0 < n + p \leq 0.6$ is preferable, $0 < n + p \leq 0.5$ is more preferable, $0 < n + p \leq 0.25$ is still more preferable, and $0 < n + p \leq 0.2$ is far still more preferable.

In the composition formula (I), p is more preferably 0.05 or more and particularly preferably 0.08 or more from the viewpoint of obtaining lithium secondary battery having a low internal resistance of the battery. In addition, from the viewpoint of obtaining lithium secondary battery having high thermal stability, n is preferably 0.5 or less and particularly preferably 0.4 or less.

The upper limit value and lower limit value of p can be randomly combined together. As examples of the combination, p's of 0.05 or more and 0.5 or less and 0.08 or more and 0.4 or less are exemplary examples.

In the composition formula (I), n is more preferably 0.0002 or more and particularly preferably 0.0005 or more from the viewpoint of improving cycle characteristics. In addition, n is preferably 0.15 or less, more preferably 0.13 or less, and particularly preferably 0.1 or less.

The upper limit value and lower limit value of n can be randomly combined together.

n is preferably $0.0002 \leq n \leq 0.15$.

The combination of x, n, and p is preferably $0 \leq m \leq 0.1$, $0.08 \leq p <\_ 0.4$, and $0.0002 \leq n \leq 0.15$.

[Composition analysis]

The composition analysis of CAM or LiMO can be measured using an ICP emission spectrometer after dissolving the powder of the obtained CAM or LiMO in hydrochloric acid.

As the ICP emission spectrometer, it is possible to use, for example, SPS3000 manufactured by Seiko Instruments Inc.

In the present embodiment, the composition of the composite phase can be confirmed using a STEM-EDX element line analysis, inductively coupled plasma emission spectrometry, electron beam microanalyzer analysis, or the like of the cross section of a particle of CAM. The crystal structure of the composite phase can be confirmed using powder X-ray diffraction or electron beam diffraction.

The BET specific surface area of CAM is preferably 2.0 $m^2/g$ or less, more preferably 1.8 $m^2/g$ or less, still more preferably 1.5 $m^2/g$ or less, and particularly preferably 1.3 $m^2/g$ or less. In addition, the BET specific surface area is preferably 0.1 $m^2/g$ or more, more preferably 0.2 $m^2/g$ or more, and particularly preferably 0.3 $m^2/g$ or more.

When the BET specific surface area is the above-described upper limit value or less, the volume capacity densities of lithium secondary battery are likely to increase. In addition, when the BET specific surface area is the above-described lower limit value or more, the discharge rate characteristics of lithium secondary battery are likely to increase.

The upper limit value and lower limit value of the BET specific surface area can be randomly combined together. As examples of the combination, BET specific surface areas of 0.1 $m^2/g$ or more and 2.0 $m^2/g$ or less, 0.2 $m^2/g$ or more and 1.8 $m^2/g$ or less, 0.3 $m^2/g$ or more and 1.5 $m^2/g$ or less, and 0.3 $m^2/g$ or more and 1.3 $m^2/g$ or less are exemplary examples.

[Measurement of BET specific surface area]

The BET specific surface area of CAM can be measured with a BET specific surface area measuring device.

As the BET specific surface area measuring device, for example, Macsorb (registered trademark) manufactured by Mountech Co., Ltd. can be used. In the case of measuring the BET specific surface area of powdery CAM, CAM is preferably dried at 105°C for 30 minutes in a nitrogen atmosphere as a pretreatment.

(Layered structure)

In the present embodiment, the crystal structure of CAM is a layered structure and more preferably a hexagonal crystal structure or a monoclinic crystal structure.

The hexagonal crystal structure belongs to any one space group selected from the group consisting of P3, P31, P32, R3, P-3, R-3, P312, P321, P3112, P3121, P3212, P3221, R32, P3m1, P31m, P3c1, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm, and P63/mmc.

In addition, the monoclinic crystal structure belongs to any one space group selected from the group consisting of P2, P21, C2, Pm, Pc, Cm, Cc, P2/m, P21/m, C2/m, P2/c, P21/c, and C2/c.

Among these, in order to obtain a lithium secondary battery having a high initial discharge capacity, the crystal structure is particularly preferably a hexagonal crystal structure belonging to the space group R-3m or a monoclinic crystal structure belonging to C2/m.

[Method for measuring crystal structure]

The crystal structure of CAM can be measured by observation using a powder X-ray diffraction measuring instrument (for example, Ultima IV manufactured by Rigaku Corporation).

<Method for producing CAM 1>

The method for producing CAM of the present embodiment is a method in which an MCC production step, an LiMO production step, and a CAM production step are sequentially performed.

In the production of LiMO, first, MCC containing a metal element other than lithium, that is, Ni, the element M, which is a random metal, and Al, which is a random metal, is prepared.

Next, MCC containing Ni, the element M, and Al and a lithium compound are preferably calcined. MCC containing Ni, the element M, and Al is preferably a metal composite hydroxide containing Ni, the element M, and Al or a metal composite oxide containing Ni, the element M, and Al.

(MCC production step)

Usually, MCC can be produced by a well-known batch coprecipitation method or continuous coprecipitation method. Hereinafter, a method for producing MCC will be described in detail using a metal composite hydroxide containing Ni, Co, and Al as metals as an example.

First, a nickel salt solution, a cobalt salt solution, an aluminum salt solution, and a complexing agent are reacted with one another by a coprecipitation method, particularly, a continuous method described in JP-A-2002-201028, thereby producing a metal composite hydroxide represented by $Ni_aCo_bAl_c(OH)_2$ (in the formula, $a + b + c = 1$).

A nickel salt, which is the solute of the nickel salt solution, is not particularly limited, and, for example, any one or more of nickel sulfate, nickel nitrate, nickel chloride, and nickel acetate can be used.

As a cobalt salt that is a solute of the cobalt salt solution, for example, any one or more of cobalt sulfate, cobalt nitrate, cobalt chloride, and cobalt acetate can be used.

As an aluminum salt that is a solute of the aluminum salt solution, for example, aluminum sulfate, sodium aluminate, or the like can be used.

The above-described metal salts are used in proportions corresponding to the composition ratio of the $Ni_aCo_bAl_c(OH)_2$. In addition, as the solvent, water is used.

The complexing agent is a compound capable of forming a complex with ions of Ni, Co, and Al in aqueous solutions. Examples of the complexing agent include ammonium ion feeders (ammonium salts such as ammonium hydroxide, ammonium sulfate, ammonium chloride, ammonium carbonate, and ammonium fluoride), hydrazine, ethylenediaminetetraacetic acid, nitrilotriacetic acid, uracil diacetic acid, and glycine. The complexing agent may not be contained, and, in a case where the complexing agent is contained, the amount of the complexing agent contained in the liquid mixture containing the nickel salt solution, the cobalt salt solution, the manganese salt solution, and the complexing agent is, for example, more than 0 and 2.0 or less in terms of the mole ratio to the sum of the numbers of moles of the metal salts.

In the co precipitation method, in order to adjust the pH value of the liquid mixture containing the nickel salt solution, the cobalt salt solution, the manganese salt solution, and the complexing agent, an alkaline aqueous solution is added to the liquid mixture before the pH of the liquid mixture turns from alkaline into neutral. As the alkaline aqueous solution, sodium hydroxide or potassium hydroxide can be used.

The value of pH in the present specification is defined as a value measured when the temperature of the liquid mixture is 40°C. The pH of the liquid mixture is measured when the temperature of the liquid mixture sampled from a reaction vessel reaches 40°C.

In a case where the temperature of the sampled liquid mixture is lower than 40°C, the pH is measured when the liquid mixture has been heated to reach 40°C.

In a case where the temperature of the sampled liquid mixture is higher than 40°C, the pH is measured when the liquid mixture has been cooled to reach 40°C.

When the complexing agent in addition to the nickel salt solution, the cobalt salt solution, and the aluminum salt solution is continuously supplied to the reaction vessel, Ni, Co, and Al react with one another, and $Ni_aCo_bAl_c(OH)_2$ is generated.

At the time of the reaction, the temperature of the reaction vessel is controlled in a range of, for example, 20°C or higher and 80°C or lower and preferably 30°C or higher and 70°C or lower.

In addition, at the time of the reaction, the pH value in the reaction vessel is controlled in a range of, for example, 9 or higher and 13 or lower and preferably 11 or higher and 13 or lower.

The substances in the reaction vessel are appropriately stirred and mixed together.

As the reaction vessel that is used in the continuous coprecipitation method, it is possible to use a reaction vessel in which the formed reaction precipitate is caused to overflow for separation.

The inside of the reaction vessel may be an inert atmosphere. In the inert atmosphere, it is possible to suppress the aggregation of elements that are more easily oxidized than nickel and to obtain a uniform metal composite hydroxide.

In addition, in the reaction vessel, an appropriate oxygen-containing atmosphere or an oxidizing agent may be present while maintaining an inert atmosphere.

An increase in the amount of the transition metal oxidized increases the specific surface area. As oxygen or the oxidizing agent in the oxygen-containing gas, a sufficient number of oxygen atoms need to be present in order to oxidize the transition metal. As long as a large amount of an oxygen atom is not introduced, an inert atmosphere in the reaction vessel can be held. In a case where the atmosphere in the reaction vessel is controlled with a gas species, a predetermined gas species may be passed into the reaction vessel or a reaction solution may be directly bubbled.

In addition to the control of the above-described conditions, the oxidation state of a reaction product may be controlled by supplying a variety of gases, for example, an inert gas such as nitrogen, argon, or carbon dioxide, an oxidizing gas such as an air or oxygen, or a gas mixture thereof to the reaction vessel.

As a compound that oxidizes the reaction product to be obtained, it is possible to use a peroxide such as hydrogen peroxide, a peroxide salt such as permanganate, perchloric acid, hypochlorous acid, nitric acid, halogen, ozone, or the like.

As a compound that reduces the reaction product to be obtained, it is possible to use an organic acid such as oxalic acid or formic acid, sulfite, hydrazine, or the like.

After the above-described reaction, the obtained reaction product is washed with water and then dried, whereby MCC is obtained. In the present embodiment, a nickel-cobalt-aluminum metal composite hydroxide is obtained as MCC. In addition, in a case where impurities derived from the liquid mixture remain in the reaction product that is washed with only water, the reaction product may be washed with a weak acid water, sodium hydroxide, or an alkaline solution containing potassium hydroxide as necessary.

In the above-described example, the nickel-cobalt-aluminum metal composite hydroxide is produced as MCC, but a nickel-cobalt-aluminum metal composite oxide may be prepared.

For example, a nickel-cobalt-aluminum metal composite oxide can be prepared by calcining a nickel-cobalt-aluminum metal composite hydroxide. Regarding the calcining time, the total time taken while the temperature begins to be raised and reaches the calcining temperature and the holding of the composite metal hydroxide at the calcining temperature ends is preferably set to 1 hour or longer and 30 hours or shorter. The temperature rising rate in the heating step until the highest holding temperature is reached is preferably 180 °C/hour or faster, more preferably 200 °C/hour or faster, and particularly preferably 250 °C/hour or faster.

The highest holding temperature in the present specification is the highest temperature of the holding temperature of the atmosphere in a calcining furnace in a calcining step and means the calcining temperature in the calcining step. In the case of a main calcining step having a plurality of heating steps, the highest holding temperature means the highest temperature in each heating step.

The temperature rising rate in the present specification is calculated from the time taken while the temperature begins to be raised and reaches the highest holding temperature in a calcining device and a temperature difference between the temperature in the calcining furnace of the calcining device at the time of beginning to raise the temperature and the highest holding temperature.

(LiMO production step)

First, MCC is dried and then mixed with the lithium compound.

LiMO is obtained by calcining a mixture containing MCC and the lithium compound.

As the lithium compound, any one or two or more of lithium carbonate, lithium nitrate, lithium acetate, lithium hydroxide, lithium hydroxide hydrate, and lithium oxide can be used or two or more thereof can be mixed together and used.

Among these lithium compounds, lithium hydroxide or lithium acetate is capable of reacting with carbon dioxide in the air and containing several percent of lithium carbonate.

In the present embodiment, the drying conditions of MCC are not particularly limited. In a case where MCC is a metal composite oxide or a metal hydroxide, the drying conditions may be, for example, any conditions of the following 1) to 3).

1) A condition under which the metal composite oxide or the metal composite hydroxide is not oxidized or reduced. Specifically, a drying condition under which a metal composite oxide remains as a metal composite oxide as it is or a drying condition under which a metal composite hydroxide remains as a metal composite hydroxide as it is.
2) A condition under which the metal composite hydroxide is oxidized. Specifically, a drying condition under which a metal composite hydroxide is oxidized to a metal composite oxide.
3) A condition under which the metal composite oxide is reduced. Specifically, a drying condition under which a metal composite oxide is reduced to a metal composite hydroxide.

In order to set the conditions under which the metal composite oxide or the metal composite hydroxide is not oxidized or reduced, an inert gas such as nitrogen, helium, or argon may be used as the atmosphere during the drying.

In order to set the condition under which a metal composite hydroxide is oxidized, oxygen or an air may be used as the atmosphere during the drying.

In addition, in order to set the condition under which the metal composite oxide is reduced, a reducing agent such as hydrazine or sodium sulfite may be used in an inert gas atmosphere during the drying.

After the drying of MCC, classification may be appropriately performed.

In the method for producing CAM, a step of crushing MCC is preferably not performed. That is, it is preferable to mix MCC that is not crushed and the lithium compound. CAM obtained using MCC that is not crushed has a lower BET specific surface area and a higher sphericity than those obtained using crushed MCC. Therefore, when LiMO having a low BET specific surface area and a high sphericity is used at the time of adding a compound containing the element X, which will be described below, the element X is likely to be distributed uniformly.

The above-described lithium compound and MCC are used in consideration of the composition ratio of a final target product. For example, in a case where the nickel-cobalt-aluminum metal composite hydroxide is used as MCC, the lithium compound and the metal composite hydroxide are used in proportions corresponding to the composition ratio of $LiNi_aCo_bAl_cO_2$ (in the formula, $a + b + c = 1$). In addition, in CAM, which is the final target product, when Li contained in the lithium compound and the metal element contained in MCC are mixed at a ratio such that the mole ratio becomes 1.1 or less, it is easy to control $C_y$ and $C_z$ of CAM to be obtained to be within the preferable ranges of the embodiment.

The mixture of the nickel cobalt aluminum metal composite hydroxide and the lithium compound is calcined, whereby a lithium-nickel-cobalt-aluminum metal composite oxide is obtained. In the calcining, a dry air, an oxygen atmosphere, an inert atmosphere, or the like is used depending on a desired composition.

The calcining step may be only one time of calcining or may have a plurality of calcining stages.

In a case where the calcining step has a plurality of calcining stages, a step in which the mixture is calcined at the highest temperature is referred to as the main calcining. Prior to the main calcining, a preliminary calcining in which the mixture is calcined at a lower temperature than in the main calcining may be performed. In addition, after the main calcining, a post calcining in which the mixture is calcined at a lower temperature than in the main calcining may be performed.

The calcining temperature (highest holding temperature) in the main calcining is preferably 600°C or higher, more preferably 650°C or higher, and particularly preferably 700°C or higher from the viewpoint of accelerating the growth of the LiMO particles. In addition, from the viewpoint of preventing cracks from being formed in the LiMO particles and maintaining the strength of the LiMO particles, the calcining temperature is preferably 1200°C or lower, more preferably 1100°C or lower, and particularly preferably 1000°C or lower.

The upper limit value and lower limit value of the highest holding temperature in the main calcining can be randomly combined together.

As examples of the combination, 600°C or higher and 1200°C or lower, 650°C or higher and 1100°C or lower, and 700°C or higher and 1000°C or lower are exemplary examples.

When the main calcining is performed at 600°C or higher, it is easy to control $C_y$ and $C_z$ of CAM to be obtained to be within the preferable ranges of the present embodiment.

The calcining temperature in the preliminary calcining or the post calcining may be lower than the calcining temperature in the main calcining, and, for example, a range of 350°C or higher and 800°C or lower is an exemplary example.

The holding temperature in the calcining may be appropriately adjusted depending on the kind of a transition metal element used and the kinds and amounts of a precipitant and the inert melting agent.

In addition, as the time during which the mixture is held at the holding temperature, 0.1 hour or longer and 20 hours or shorter is an exemplary example, and 0.5 hours or longer and 10 hours or shorter is preferable. The temperature rising rate up to the holding temperature is usually 50 °C/hour or faster and 400 °C/hour or slower, and the temperature lowering rate from the holding temperature to room temperature is usually 10 °C/hour or faster and 400 °C/hour or slower. In addition, as the atmosphere for the calcining, it is possible to use the atmosphere, oxygen, nitrogen, argon or a gas mixture thereof.

(CAM production step)

CAM can be obtained by mixing LiMO obtained in the above-described step and a compound containing the element X and thermally treating a mixture.

As the compound containing the element, a lithium compound containing the element X, an oxide containing the element X, a hydroxide containing the element X, a carbonate containing the element X, a nitrate containing the element X, a sulfate containing the element X, an ammonium salt containing the element X, a halide containing the element X, an oxalate containing the element X, and the like are exemplary examples. As the compound containing the element X, an oxide containing the element X is preferable.

As the compound containing the element X, aluminum oxide, aluminum hydroxide, aluminum sulfate, aluminum chloride, boron oxide, boric acid, lithium borate, niobium oxide, lithium niobate, titanium oxide, titanium hydroxide, tungsten oxide, tungstic acid, tungsten chloride, ammonium dihydrogen phosphate, diphosphorus pentoxide, phosphate, lithium phosphate, zirconium oxide, magnesium oxide, magnesium sulfate, tin oxide, and the like are exemplary examples, aluminum oxide, aluminum hydroxide, boron oxide, boric acid, niobium oxide, lithium niobate, titanium oxide, tungsten oxide, ammonium dihydrogen phosphate, lithium borate, or lithium phosphate are preferable.

The amount of the compound containing the element X added is adjusted according to the kind of the element X so that the proportion of the mole amount of the element X in the total mole amount of the metal elements other than Li contained in LiMO is within a preferable range.

For example, in the CAM production step, in the case of using a compound containing at least one selected from the group consisting of Ti, Nb, P, Zr, Mg, Sn, W, and B as the element X, the proportion of the mole amount of the element X in the total mole amount of the metal elements other than a lithium atom contained in LiMO is preferably 1.0 mol% or more and 5.5 mol% or less.

In addition, in the CAM production step, in the case of using a compound containing Al as the element X, the proportion of the mole amount of the element X in the total mole amount of the metal elements other than Li contained in LiMO is preferably 1.0 mol% or more and 8.0 mol% or less and more preferably 1.0 mol% or more and 5.5 mol% or less.

In order to efficiently form a composite phase having ion conductivity on the surface of LiMO, the 50% cumulative volume particle diameter $D_{50}$ ($\mu$m) of the compound containing the element X is preferably 90 $\mu$m or less and more preferably 80 $\mu$m or less. In addition, $D_{50}$ of the compound containing the element X is preferably 0.02 $\mu$m or more and particularly preferably 0.05 $\mu$m or more.

The upper limit value and lower limit value of $D_{50}$ can be randomly combined together. As examples of the combination, $D_{50}$'s of 0.02 $\mu$m or more and 90 $\mu$m or less and 0.05 $\mu$m or more and 80 $\mu$m or less are exemplary examples.

In the case of using a compound containing at least one selected from the group consisting of Al, Ti, Nb, Zr, Mg, Sn, and W as the element X, $D_{50}$ of the compound containing the element X is more preferably 0.02 $\mu$m or more $\mu$m and 20 $\mu$m or less and still more preferably 0.05 $\mu$m or more and 14 $\mu$m or less.

In the case of using a compound containing at least one selected from the group consisting of B and P as the element X, $D_{50}$ of the compound containing the element X is preferably 0.02 $\mu$m or more and 90 $\mu$m or less and more preferably 0.02 $\mu$m or more and 80 $\mu$m or less.

The use of the compound containing the element X having $D_{50}$ within the above-described range makes it possible to control Cx, Cy, and Cz of CAM to be obtained to be within the preferable ranges of the present embodiment.

[Method for measuring $D_{50}$ of compound containing element X]

The 50% cumulative volume particle diameter $D_{50}$ of the compound containing the element X can be measured by the following wet-type or dry-type method. In the present embodiment, the compound containing B or P as the element X is measured by the dry-type method. In addition, the compound containing the element X other than B and P as the element X is measured by the wet-type method.

(Wet-type measurement method)

The wet-type measurement method is as described below.

Specifically, first, 2 g of the powder of the compound containing the element X is injected into 50 ml of a 0.2 mass% sodium hexametaphosphate aqueous solution to obtain a dispersion liquid in which the powder of the compound containing the element X is dispersed.

Next, the particle size distribution of the obtained dispersion liquid is measured with a laser diffraction particle size distribution meter to obtain a volume-based cumulative particle size distribution curve. In addition, in the obtained cumulative particle size distribution curve, the value of a particle diameter at 50% cumulation from the fine particle side is the 50% cumulative volume particle diameter $D_{50}$ ($\mu$m). As the laser diffraction particle size distribution meter, for example, MS2000 manufactured by Malvern Panalytical Ltd. can be used.

(Dry-type measurement method)

The dry-type measurement method is as described below.

Specifically, first, the dry-type particle size distribution is measured with a laser diffraction particle size distribution meter using 2 g of the powder of the compound containing the element X, and a volume-based cumulative particle size distribution curve is obtained. In the obtained cumulative particle size distribution curve, the value of a particle diameter at 50% cumulation from the fine particle side is the 50% cumulative volume particle diameter $D_{50}$ ($\mu$m). As the laser diffraction particle size distribution meter, for example, MS2000 manufactured by Malvern Panalytical Ltd. can be used.

The compound containing the element X and LiMO are uniformly mixed until an aggregate of the compound containing the element X or an aggregate of LiMO disappears. The mixing device is not limited as long as the compound containing the element X and LiMO can be uniformly mixed, but the compound containing the element X and LiMO are preferably mixed using, for example, a Loedige mixer.

In addition, when the compound containing the element X and LiMO are mixed in an atmosphere containing water or water and carbon dioxide, it is possible to more firmly form a composite phase having ion conductivity on the surface of LiMO.

The composite phase having ion conductivity can also be firmly formed on the surface of LiMO by holding the compound containing the element X and LiMO in an atmosphere containing water or water and carbon dioxide after the mixing.

In a case where the compound containing the element X and LiMO are mixed and then thermally treated, there are cases where the thermal treatment conditions vary depending on the kind of the compound containing the element X. As the thermal treatment conditions, the thermal treatment temperature and the holding time of the thermal treatment are exemplary examples.

In the case of using a compound containing at least one selected from the group consisting of Ti, Nb, Zr, Mg, Sn, W, and B as the element X in the present step, the thermal treatment is preferably performed in a temperature range of 300°C or higher and 650°C or lower for 4 hours or longer and 10 hours or shorter.

In the case of using a compound containing Al as the element X in the present step, the thermal treatment is preferably performed in a temperature range of 300°C or higher and 600°C or lower for 4 hours or longer and 10 hours or shorter.

When the thermal treatment temperature is higher than the above-described range, there are cases where the compound containing the element X diffuses into the crystal structure of LiMO and the stability of the crystal structure deteriorates. When the holding time of the thermal treatment is shorter than 4 hours, there are cases where the diffusion of the compound containing the element X is insufficient and a composite phase having ion conductivity is not uniformly formed.

In a step of adding the compound containing the element X, when the proportion of the mole amount of the element X in the total mole amount of the metal elements other than Li contained in LiMO, the calcining temperature, and the 50% cumulative volume particle diameter $D_{50}$ are adjusted depending on the kind of the compound containing the element X to be added, it is easy to control Cx and Cx/Cy of CAM to be obtained to be within the preferable ranges of the present embodiment.

<Method for producing CAM 2>

The method for producing CAM 2 includes the following step (a), step (b), and step (c) in this order.

Step (a): A step of mixing and calcining a metal composite compound containing at least Ni and a lithium compound to obtain a lithium metal composite oxide.

Step (b): A step of mixing the lithium metal composite oxide and a compound containing an element X in proportions at which a proportion of a mole amount of the element X in a total mole amount of metal elements other than a lithium atom contained in the lithium metal composite oxide becomes 1.0 mol% or more and 5.5 mol% or less to obtain a mixture. The element X is one or more elements selected from the group consisting of Al, Ti, Nb, B, W, Zr, Mg, Sn, and P, and a 50% cumulative volume particle diameter $D_{50}$ ($\mu$m) of the compound containing the element X is 0.02 $\mu$m or more and 90 $\mu$m or less.

Step (c): A step of thermally treating the mixture at a temperature of 200°C or higher and 600°C or lower in an oxygen-containing atmosphere.

Step (a)

The step (a) is the same step as the LiMO production step in the above-described method for producing CAM 1. As a change from the LiMO production step in the method for producing CAM 1, the method for producing CAM 2 preferably includes a step of mixing and calcining MCC and a lithium compound and crushing the obtained calcined product with a millstone-type crusher.

The method may include a step of crushing a calcined product obtained by calcining MCC and a lithium compound once with a millstone-type crusher.

A first calcined product obtained by calcining MCC and a lithium compound once may be crushed with a millstone-type crusher, and a second calcined product obtained by calcining the crushed product may be further crushed with the millstone-type crusher.

As the conditions for crushing with the millstone-type crusher, for example, a rotation speed of 1000 rpm or faster and 3000 rpm or slower and a clearance of 50 $\mu$m or more and 200 $\mu$m or less are exemplary examples.

Crushing the calcined product under the above-described conditions makes it easy to obtain CAM that satisfies (1) and (2) and CAM that satisfies (1) and (3).

Step (b) and step (c)

The step (b) and the step (c) are the same steps as the CAM production step in the method for producing CAM 1 except that the thermal treatment temperature of the mixture is different.

In the step (b), in the case of using a compound containing at least one selected from the group consisting of Ti, Nb, Zr, Mg, Sn, W, and B as the element X, as the thermal treatment condition, the thermal treatment temperature is preferably set in a temperature range of 200°C or higher and 650°C or lower and more preferably 200°C or higher and 600°C or lower. The thermal treatment time is preferably 4 hours or longer and 10 hours or shorter.

In the step (b), in the case of using a compound containing Al as the element X, as the thermal treatment condition, the thermal treatment temperature is preferably set in a temperature range of 200°C or higher and 600°C or lower. The thermal treatment time is preferably set to 4 hours or longer and 10 hours or shorter.

When the thermal treatment temperature is higher than the above-described range, there are cases where the compound containing the element X diffuses into the crystal structure of LiMO and the stability of the crystal structure deteriorates. When the holding time of the thermal treatment is shorter than 4 hours, there are cases where the diffusion of the compound containing the element X is insufficient and a composite phase having ion conductivity is not uniformly formed.

The step (b) preferably has a step of mixing a coating raw material containing the element X and LiMO in an atmosphere containing water or water and carbon dioxide. In the case of mixing the coating raw material and LiMO in an atmosphere containing water and carbon dioxide, the amount of moisture in the atmosphere is preferably 40% or more in terms of relative humidity.

The step (b) preferably has a step of mixing the coating raw material containing the element X and LiMO and holding the mixture in an atmosphere containing water or water and carbon dioxide after the mixing. The holding time after the mixing is preferably 0.5 hours or longer and 3 hours or shorter.

<Lithium secondary battery>

Next, a positive electrode for a lithium secondary battery for which CAM of the present embodiment is used (hereinafter, referred to as the positive electrode in some cases) and a lithium secondary battery having this positive electrode will be described while describing the configuration of the lithium secondary battery.

CAM of the present embodiment is preferably composed of CAM of the present embodiment, but may contain other components as long as the effects of the present invention are not impaired.

An example of the lithium secondary battery that is suitable in a case where CAM of the present embodiment is used has a positive electrode, a negative electrode, a separator interposed between the positive electrode and the negative electrode, and an electrolyte solution disposed between the positive electrode and the negative electrode.

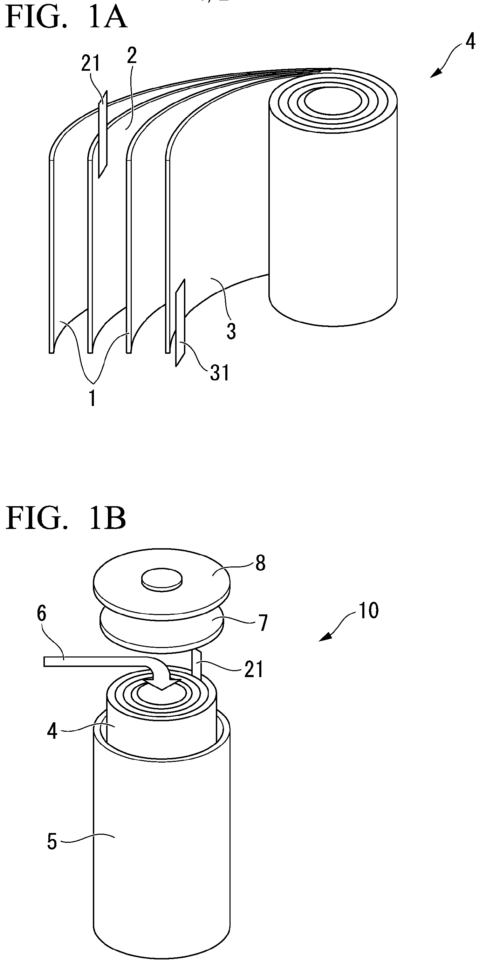

FIG. 1A and FIG. 1B are schematic views showing an example of the lithium secondary battery. A cylindrical lithium secondary battery 10 is produced as described below.

First, as shown in FIG. 1A, a pair of separators 1 having a strip shape, a strip-shaped positive electrode 2 having a positive electrode lead 21 at one end, and a strip-shaped negative electrode 3 having a negative electrode lead 31 at one end are laminated in the order of the separator 1, the positive electrode 2, the separator 1, and the negative electrode 3 and are wound to form an electrode group 4.

Next, as shown in FIG. 1B, the electrode group 4 and an insulator (not shown) are accommodated in a battery can 5, then, the can bottom is sealed, the electrode group 4 is impregnated with an electrolyte solution 6, and an electrolyte is disposed between the positive electrode 2 and the negative electrode 3. Furthermore, the upper portion of the battery can 5 is sealed with a top insulator 7 and a sealing body 8, which makes it possible to produce a lithium secondary battery 10.

As the shape of the electrode group 4, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as the shape of a lithium secondary battery having such an electrode group 4, a shape that is specified by IEC60086, which is a standard for batteries specified by the International Electrotechnical Commission (IEC) or by JIS C 8500 can be adopted. Shapes such as a cylindrical shape and a square shape can be exemplary examples.

Furthermore, the lithium secondary battery is not limited to the winding-type configuration and may have a lamination-type configuration in which the laminated structure of the positive electrode, the separator, the negative electrode, and the separator is repeatedly overlaid. As the laminate-type lithium secondary battery, a so-called coin-type battery, button-type battery, or paper-type (or sheet-type) battery can be an exemplary example.

Hereinafter, each configuration will be described in order.

(Positive electrode)

A positive electrode of the present embodiment can be manufactured by first preparing a positive electrode mixture containing CAM, a conductive material, and a binder, and causing a positive electrode current collector to support the positive electrode mixture.

(Conductive material)

As the conductive material in the positive electrode, a carbon material can be used. As the carbon material, graphite powder, carbon black (for example, acetylene black), a fibrous carbon material, and the like can be exemplary examples.

The proportion of the conductive material to the positive electrode mixture is preferably 5 parts by mass or more and 20 parts by mass or less with respect to 100 parts by mass of the positive electrode active material. In the case of using a fibrous carbon material such as a graphitized carbon fiber or a carbon nanotube as the conductive material, it is also possible to decrease the proportion.

(Binder)

As the binder in the positive electrode, a thermoplastic resin can be used. As the thermoplastic resin, polyimide resins; fluororesins such as polyvinylidene fluoride (hereinafter, referred to as PVdF in some cases) and polytetrafluoroethylene; polyolefin resins such as polyethylene and polypropylene, and the resins described in WO 2019/098384A1 or US2020/0274158A1 can be exemplary examples.

Two or more of these thermoplastic resins may be used in a mixture form. When a fluororesin and a polyolefin resin are used as the binder, the proportion of the fluororesin in the entire positive electrode mixture is set to 1 mass% or more and 10 mass% or less, and the proportion of the polyolefin resin is set to 0.1 mass% or more and 2 mass% or less, it is possible to obtain a positive electrode mixture having both a high adhesive force to the positive electrode current collector and a high bonding force in the positive electrode mixture.

(Positive electrode current collector)

As the positive electrode current collector in the positive electrode, a strip-shaped member formed of a metal material such as Al, Ni, or stainless steel as a forming material can be used. Particularly, a positive electrode current collector that is formed of Al and has a thin film shape is preferable since the positive electrode current collector is easy to process and inexpensive.

As the method for supporting the positive electrode mixture by the positive electrode current collector, a method in which the positive electrode mixture is formed by pressurization on the positive electrode current collector is an exemplary example. In addition, the positive electrode mixture may be supported by the positive electrode current collector by preparing a paste of the positive electrode mixture using an organic solvent, applying and drying the paste of the positive electrode mixture to be obtained on at least one surface side of the positive electrode current collector, and fixing the positive electrode mixture by pressing.

As the organic solvent that can be used in the case of preparing the paste of the positive electrode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, referred to as NMP in some cases) are exemplary examples.

As the method for applying the paste of the positive electrode mixture to the positive electrode current collector, a slit die coating method, a screen coating method, a curtain coating method, a knife coating method, a gravure coating method, and an electrostatic spraying method are exemplary examples.

The positive electrode can be produced by the method exemplified above.

(Negative electrode)

The negative electrode in the lithium secondary battery needs to be a material which can be doped with lithium ions and from which lithium ions can be de-doped at a potential lower than that of the positive electrode, and an electrode in which a negative electrode mixture containing a negative electrode active material is supported by a negative electrode current collector and an electrode formed of a negative electrode active material alone are exemplary examples.

(Negative electrode active material)

As the negative electrode active material in the negative electrode, materials which are a carbon material, a chalcogen compound (oxide, sulfide, or the like), a nitride, a metal, or an alloy and can be doped with lithium ions and from which lithium ions can be de-doped at a lower potential than the positive electrode are exemplary examples.

As the carbon material that can be used as the negative electrode active material, graphite such as natural graphite and artificial graphite, cokes, carbon black, pyrolytic carbons, carbon fibers, and calcined products of an organic polymer compound are exemplary examples.

As oxides that can be used as the negative electrode active material, oxides of silicon represented by a formula $SiO_x$ (here, x is a positive real number) such as $SiO_2$ and SiO oxides of tin represented by a formula $SnO_x$ (here, x is a positive real number) such as $SnO_2$ and SnO; and metal composite oxides containing lithium and titanium such as $Li_4Ti_5O_{12}$ and $LiVO_2$ can be exemplary examples.

In addition, as the metal that can be used as the negative electrode active material, lithium metal, silicon metal, tin metal, and the like can be exemplary examples.

As a material that can be used as the negative electrode active material, the materials described in WO 2019/098384A1 or US2020/0274158A1 may be used.

These metals and alloys can be used as an electrode, mainly, singly after being processed into, for example, a foil shape.

Among the above-described negative electrode active materials, the carbon material containing graphite such as natural graphite or artificial graphite as a main component is preferably used for the reason that the potential of the negative electrode rarely changes (the potential flatness is favorable) from a uncharged state to a fully-charged state during charging, the average discharging potential is low, the capacity retention rate at the time of repeatedly charging and discharging the lithium secondary battery is high (the cycle characteristics are favorable), and the like. The shape of the carbon material may be, for example, any of a flaky shape such as natural graphite, a spherical shape such as mesocarbon microbeads, a fibrous shape such as a graphitized carbon fiber, or an aggregate of fine powder.

The negative electrode mixture may contain a binder as necessary. As the binder, thermoplastic resins can be exemplary examples, and specifically, PVdF, thermoplastic polyimide, carboxymethylcellulose (hereinafter, referred to as CMC in some cases), styrene-butadiene rubber (hereinafter, referred to as SBR in some cases), polyethylene, and polypropylene can be exemplary examples.

(Negative electrode current collector)

As the negative electrode current collector in the negative electrode, a strip-shaped member formed of a metal material such as Cu, Ni, or stainless steel as the forming material can be an exemplary example. Particularly, a negative electrode current collector that is formed of Cu and has a thin film shape is preferable since the negative electrode current collector does not easily produce an alloy with lithium and is easy to process.

As the method for supporting the negative electrode mixture by the negative electrode current collector, similarly to the case of the positive electrode, a method in which the negative electrode mixture is formed by pressurization and a method in which a paste of the negative electrode mixture is prepared using a solvent or the like, applied and dried on the negative electrode current collector, and then the negative electrode mixture is compressed by pressing are exemplary examples.

(Separator)

As the separator in the lithium secondary battery, it is possible to use, for example, a material that is made of a material such as a polyolefin resin such as polyethylene or polypropylene, a fluororesin, or a nitrogen-containing aromatic polymer and has a form such as a porous film, a non-woven fabric, or a woven fabric. In addition, the separator may be formed using two or more of these materials or the separator may be formed by laminating these materials. In addition, the separators described in JP-A-2000-030686 or US20090111025A1 may be used.

The air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

(Electrolyte solution)

The electrolyte solution in the lithium secondary battery contains an electrolyte and an organic solvent.

As the electrolyte that is contained in the electrolyte solution, lithium salts such as $LiClO_4$, $LiPF_6$, and $LiBF_4$ are exemplary examples, and a mixture of two or more thereof may be used. In addition, the electrolytes described in WO 2019/098384A1 or US2020/0274158A1 may be used. Among these, as the electrolyte, at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine, is preferably used.

As the organic solvent that is contained in the electrolyte solution, for example, propylene carbonate, ethylene carbonate, dimethyl carbonate, diethyl carbonate, ethyl methyl carbonate, and the organic solvents described in WO 2019/098384A1 or US2020/0274158A1 can be used.

As the organic solvent, two or more of these are preferably mixed and used, and a solvent mixture of a cyclic carbonate and a non-cyclic carbonate and a solvent mixture of a cyclic carbonate and ethers are more preferable. As the solvent mixture of a cyclic carbonate and a non-cyclic carbonate, a solvent mixture containing ethylene carbonate, dimethyl carbonate, and ethyl methyl carbonate is preferable.

In addition, as the electrolyte solution, it is preferable to use an electrolyte solution containing a lithium salt containing fluorine such as $LiPF_6$ and an organic solvent having a fluorine substituent since the safety of lithium secondary battery to be obtained is enhanced.

In addition, since positive electrodes having the above-described configuration have CAM having the above-described configuration, it is possible to improve the cycle characteristics of lithium secondary battery.

Furthermore, the lithium secondary battery having the above-described configuration has the above-described positive electrode and thus becomes a secondary battery having high cycle characteristics.

<All-solid-state lithium-ion secondary battery>

Next, a positive electrode for which CAM according to an aspect of the present invention is used as CAM for an all-solid-state lithium secondary battery and an all-solid-state lithium secondary battery having this positive electrode will be described while describing the configuration of the all-solid-state lithium secondary battery.

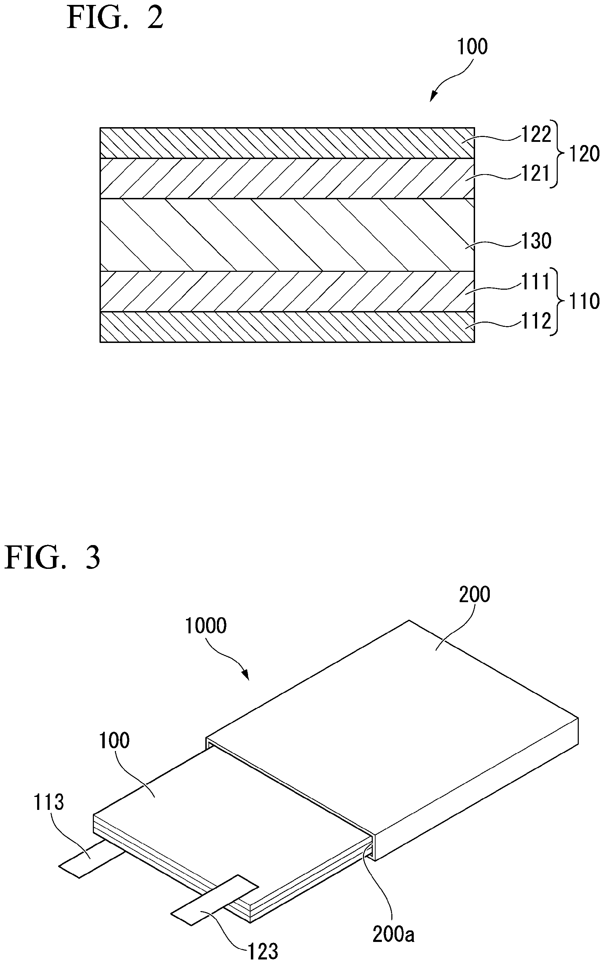

FIGS. 2 and 3 are schematic views showing an example of the all-solid-state lithium-ion secondary battery. FIG. 2 is a schematic view showing a laminate that the all-solid-state lithium-ion secondary battery includes. FIG. 3 is a schematic view showing an entire configuration of the all-solid-state lithium-ion secondary battery.

An all-solid-state lithium-ion secondary battery 1000 has a laminate 100 having a positive electrode 110, a negative electrode 120, and a solid electrolyte layer 130 and an exterior body 200 accommodating the laminate 100. In addition, the all-solid-state lithium secondary battery 1000 may have a bipolar structure in which a CAM and a negative electrode active material are disposed on both sides of a current collector. As specific examples of the bipolar structure, for example, the structures described in JP-A-2004-95400 are exemplary examples.

A material that configures each member will be described below.

The laminate 100 may have an external terminal 113 that is connected to a positive electrode current collector 112 and an external terminal 123 that is connected to a negative electrode current collector 122.

In the laminate 100, the positive electrode 110 and the negative electrode 120 interpose the solid electrolyte layer 130 so as not to short-circuit each other. In addition, the all-solid-state lithium-ion secondary battery 1000 may have a separator, which has been used in conventional liquid-based lithium ion secondary battery, between the positive electrode 110 and the negative electrode 120 to prevent a short circuit between the positive electrode 110 and the negative electrode 120.

The all-solid-state lithium-ion secondary battery 1000 has an insulator, not shown, that insulates the laminate 100 and the exterior body 200 from each other or a sealant, not shown, that seals an opening portion 200a of the exterior body 200.

As the exterior body 200, a container formed of a highly corrosion-resistant metal material such as aluminum, stainless steel or nickel-plated steel can be used. In addition, a container obtained by processing a laminate film having at least one surface on which a corrosion resistant process has been performed into a bag shape can also be used.

As the shape of the all-solid-state lithium-ion secondary battery 1000, for example, shapes such as a coin type, a button type, a paper type (or a sheet type), a cylindrical type, and a square type can be exemplary examples.

The all-solid-state lithium-ion secondary battery 1000 is shown in the drawings to have one laminate 100, but is not limited thereto. The all-solid-state lithium-ion secondary battery 1000 may have a configuration in which the laminate 100 is used as a unit cell and a plurality of unit cells (laminates 100) is sealed inside the exterior body 200.

Hereinafter, each configuration will be described in order.

(Positive electrode)

The positive electrode 110 has a positive electrode active material layer 111 and a positive electrode current collector 112.

The positive electrode active material layer 111 contains CAM, which is one aspect of the present invention described above. In addition, the positive electrode active material layer 111 may contain a solid electrolyte (second solid electrolyte), a conductive material, and a binder.

CAM contained in the positive electrode active material layer 111 is in contact with the second solid electrolyte contained in the positive electrode active material layer 111. Specifically, the positive electrode active material layer 111 contains a plurality of particles containing LiMO crystals (CAM) and a solid electrolyte loaded between the plurality of particles (CAM) and in contact with the particles (CAM).

(Solid electrolyte)

As the solid electrolyte that the positive electrode active material layer 111 may have, a solid electrolyte that has lithium ion conductivity and used in well-known all-solid-state batteries can be adopted. As the solid electrolyte, an inorganic electrolyte and an organic electrolyte can be exemplary examples. As the inorganic electrolyte, an oxide-based solid electrolyte, a sulfide-based solid electrolyte, and a hydride-based solid electrolyte can be exemplary examples. As the organic electrolyte, polymer-based solid electrolytes are exemplary examples.

As each electrolyte, the compounds described in WO 2020/208872A1, US2016/0233510A1, US2012/0251871A1, and US2018/0159169A1 are exemplary examples, and examples thereof include the following compounds.

In the present embodiment, an oxide-based solid electrolyte or a sulfide-based solid electrolyte is preferably used, and an oxide-based solid electrolyte is more preferably used.

(Oxide-based solid electrolyte)

As the oxide-based solid electrolyte, for example, a perovskite-type oxides, a NASICON-type oxide, a LISICON-type oxide, a garnet-type oxides, and the like are exemplary examples. Specific examples of each oxide include the compounds described in WO 2020/208872A1, US2016/0233510A1, and US2020/0259213A1.

As the garnet-type oxide, Li-La-Zr-based oxides such as $Li_7La_3Zr_2O_{12}$ (LLZ) are exemplary examples.

The oxide-based solid electrolyte may be a crystalline material or an amorphous (amorphous) material. As the amorphous (amorphous) solid electrolyte, for example, Li-B-O compounds such as $Li_3BO_3$, $Li_2B_4O_7$, and $LiBO_2$ are exemplary examples. The oxide-based solid electrolyte preferably contains an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, $Li_{10}GeP_2S_{12}$, and the like can be exemplary examples.

In the present specification, the expression "-based compound" that indicates the sulfide-based solid electrolyte is used as a general term for solid electrolytes mainly containing a raw material written before "-based compound" such as "$Li_2S$" or "$P_2S_5$". For example, the $Li_2S-P_2S_5$-based compounds include solid electrolytes containing $Li_2S$ and $P_2S_5$ and further containing a different raw material. In addition, the $Li_2S-P_2S_5$-based compounds also include solid electrolytes containing $Li_2S$ and $P_2S_5$ in different mixing ratios.

As the $Li_2S-P_2S_5$-based compounds, $Li_2S-P_2S_5$, $Li_2S-P_2S_5$-LiI, $Li_2S-P_2S_5$-LiCl, $Li_2S-P_2S_5$-LiBr, $Li_2S-P_2S_5$-LiI-LiBr, and the like can be exemplary examples.

As the $Li_2S-SiS_2$-based compounds, $Li_2S-SiS_2$, $Li_2S-SiS_2$-LiI, $Li_2S-SiS_2$-LiBr, $Li_2S-SiS_2$-LiCl, $Li_2S-SiS_2-B_2S_3$-LiI, $Li_2S-SiS_2-P_2S_5$-LiI, $Li_2S-SiS_2-P_2S_5$-LiCl, and the like are exemplary examples.

As the $Li_2S-GeS_2$-based compounds, $Li_2S-GeS_2$, $Li_2S-GeS_2-P_2S_5$, and the like are exemplary examples.

The sulfide-based solid electrolyte may be a crystalline material or an amorphous material.

Two or more solid electrolytes can be jointly used as long as the effect of the invention is not impaired.

(Conductive material and binder)

As the conductive material that the positive electrode active material layer 111 has, the materials described in the above-described (conductive material) can be used. In addition, as for the proportion of the conductive material in the positive electrode mixture, the proportions described in the above-described (conductive material) can be applied in the same manner. In addition, as the binder that the positive electrode has, the materials described in the above-described (binder) can be used.

(Positive electrode current collector)

As the positive electrode current collector 112 that the positive electrode 110 has, the materials described in the above-described (positive electrode current collector) can be used.

As a method for supporting the positive electrode active material layer 111 by the positive electrode current collector 112, a method in which the positive electrode active material layer 111 is formed by pressurization on the positive electrode current collector 112 is an exemplary example. A cold press or a hot press can be used for the pressurization.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the positive electrode mixture to be obtained on at least one surface of the positive electrode current collector 112, and fixing the positive electrode mixture by pressing.

In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the positive electrode mixture to be obtained on at least one surface of the positive electrode current collector 112, and sintering the positive electrode mixture.

As the organic solvent that can be used for the positive electrode mixture, the same organic solvent as the organic solvent that can be used in the case of preparing the paste of the positive electrode mixture described in the above-described (positive electrode current collector) can be used.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode 110 can be produced by the method exemplified above.

(Negative electrode)

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and a binder, those described above can be used.

(Solid electrolyte layer)

The solid electrolyte layer 130 has the above-described solid electrolyte.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-form mixture containing a solid electrolyte on the surface of the positive electrode active material layer 111 in the above-described positive electrode 110. The solid electrolyte layer 130 may be formed by pressing the dried paste-form mixture and further pressurizing the paste-form mixture by a cold isostatic pressure method (CIP).

The laminate 100 can be produced by laminating the negative electrode 120 on the solid electrolyte layer 130 provided on the positive electrode 110 as described above using a well-known method in an aspect that the negative electrode electrolyte layer 121 comes into contact with the surface of the solid electrolyte layer 130.

According to CAM having the above-described configuration, it is possible to smoothly exchange lithium ions between the positive electrode and the solid electrolyte and to improve the battery performance.

According to the electrode having the above-described configuration, since the all-solid-state lithium-ion battery has the positive electrode active material for an all-solid-state lithium-ion battery, it is possible to improve the battery performance of the all-solid-state lithium-ion battery.

[Method for measuring initial discharge capacity and cycle retention rate]

<Production of positive electrode for lithium secondary battery>

A paste-like positive electrode mixture was prepared by adding and kneading CAM that was obtained by a production method to be described below, a conductive material (acetylene black), and a binder (PVdF) in proportions at which a composition of CAM:conductive material:binder = 92:5:3 (mass ratio) was achieved. During the preparation of the positive electrode mixture, N-methyl-2-pyrrolidone was used as an organic solvent.

The obtained positive electrode mixture was applied to an Al foil having a thickness of 40 $\mu$m, which was to serve as a current collector, and dried in a vacuum at 150°C for 8 hours, thereby obtaining a lithium secondary battery positive electrode. The electrode area of the lithium secondary battery positive electrode was set to 1.65 cm$^2$.

<Production of lithium secondary battery (coin-type half cell)>

The following operation was performed in a glove box under an argon atmosphere.

The lithium secondary battery positive electrode produced in the section <Production of positive electrode for lithium secondary battery> was placed on the lower lid of a part for a coin-type battery R2032 (manufactured by Hohsen Corp.) with the aluminum foil surface facing downward, and a separator (polyethylene porous film) was placed on the lithium secondary battery positive electrode. An electrolyte solution (300 $\mu$l) was poured thereinto. As the electrolyte solution, an electrolyte solution obtained by dissolving LiPF$_6$ in a liquid mixture of ethylene carbonate, dimethyl carbonate, and ethyl methyl carbonate in a volume ratio of 30:35:35 in a proportion of 1.0 mol/l was used.

Next, lithium metal was used as a negative electrode, and the negative electrode was placed on the upper side of the laminated film separator. An upper lid was placed through a gasket and caulked using a caulking machine, thereby producing a lithium secondary battery (coin-type half cell R2032; hereinafter, referred to as "half cell" in some cases.).

<Charge and discharge test>

An initial charge and discharge efficiency test and a cycle test were performed using the half cell produced by the above-described method, and the initial discharge capacity and the cycle capacity retention rate were evaluated as the indexes of the performance of the secondary battery.

· Initial charge and discharge test

At a testing temperature of 25°C, the set current value was set to 0.2CA for both charging and the discharging, and each of constant-current constant-voltage charging and constant-current-discharging was performed.

The maximum charge voltage was set to 4.35 V, and the minimum discharge voltage was set to 2.8 V.

· Cycle test

A cycle test was performed subsequent to the initial charge and discharge test, and the testing temperature was set to 25°C. The number of times of repetition of a charge and discharge cycle was set to 50 times. The set current value was set to 1CA, and each of constant-current constant-voltage charging and constant-current-discharging was performed.

> Charging: Set current value of 1CA, maximum voltage of 4.35 V, constant-voltage constant-current charging
> Discharging: Set battery value of 1 CA, minimum voltage of 2.8 V, constant-current-discharging

· Cycle retention rate

From the discharge capacity of the first cycle and the discharge capacity of the 50th cycle in the cycle test, the cycle capacity retention rate was calculated by the following equation. As the cycle capacity retention rate increases, it is possible to further suppress a decrease in the battery capacity after the repetition of charging and discharging, which is preferable as the battery performance.

$$\text{Cycle retention rate (\%)} =$$

$$\text{Discharge capacity of } 50^{\text{th}} \text{ cycle (mAh/g)/discharge capacity of first cycle}$$

$$\text{(mAh/g) x 100}$$

[Examples]

Next, the present invention will be described in more detail using examples.

<Composition analysis>

The composition analysis of CAM to be produced by a method described below was performed by the method described in the above-described section [Composition analysis].

<Measurement of BET specific surface area>

The BET specific surface area of CAM was performed by the method described in the section [Measurement of BET specific surface area].

<Measurement of $D_{50}$ of compound containing element X>

The 50% cumulative volume particle diameter $D_{50}$ of the compound containing the element X was measured by the method described in the section [Method for measuring $D_{50}$ of compound containing element X]. The compound containing B or P as the element X was measured by a dry-type method. In addition, the compound containing the element X other than B and P was measured by the following wet-type method.
The wet-type measurement method was performed according to the above-described (Wet-type measurement method).
The dry-type measurement method was performed according to the above-described (Dry-type measurement method).

<X-ray photoelectron spectroscopy (XPS)>

Measurement using XPS was performed by the method described in the section [X-ray photoelectron spectroscopic analysis].

· Measurement of Cx

Regarding the spectrum of the element X (as the spectral peak of the element X, aluminum 2p, titanium 2p, niobium 3d, boron 1s, tungsten 4f, zirconium 3d, magnesium 2p, tin 3d, and phosphorus 2p), the abundance (mass%) of each element was calculated from the peak area of the spectrum of each element.

· Measurement of Cy

The abundance (mass%) of a carbon atom was calculated based on the peak area of the C1s spectrum having a peak top at a binding energy of 290 $\pm$ 5 eV

<Combustion-infrared absorption method>

· Measurement of Cz

The abundance (mass%) of the carbon atoms contained in all of the particles of CAM was calculated by the combustion-infrared absorption method.

In the combustion-infrared absorption method, EMIA-810W was used for measurement. The measurement was performed in an oxygen stream, and the combustion temperature was set to 1400°C. After the start of combustion, analysis was performed for 60 seconds, the generated carbon-containing gas component was measured with an infrared detector, and the abundance of a carbon atom was calculated.

<Calculation of Cx/Cy>

Cx/Cy, which is the ratio of Cx to Cy, was calculated using the values of Cx and Cy obtained by the above-described method.

<Calculation of Cy/Cz>

Cy/Cz, which is the ratio of Cy to Cz, was calculated using the values of Cy and Cz obtained by the above-described method.

<Method for measuring initial discharge capacity and cycle retention rate>

As indexes of secondary battery performance, the initial discharge capacity and the cycle capacity retention rate were evaluated. Specifically, the initial discharge capacity and the cycle capacity retention rate were measured by the method described in the section [Method for measuring initial discharge capacity and cycle retention rate].

<<Example 1>>

1. Production of CAM-1

After water was poured into a reaction vessel including a stirrer and an overflow pipe, a sodium hydroxide aqueous solution was added thereto, and the liquid temperature was held at 50°C.

A nickel sulfate aqueous solution, a cobalt sulfate aqueous solution, and an aluminum sulfate aqueous solution were mixed together in proportions at which the atomic ratio of Ni, Co, and Al reached 88:9:3, thereby preparing a raw material-mixed liquid.

Next, the raw material liquid mixture and an ammonium sulfate aqueous solution, as a complexing agent, were continuously added into the reaction vessel under stirring. A sodium hydroxide aqueous solution was timely added dropwise such that the pH of the solution in the reaction vessel reached 11.6 (when measured at a liquid temperature of 40°C), and the particles of nickel-cobalt-aluminum composite hydroxide were obtained.

The nickel cobalt aluminum composite hydroxide particles were washed, then, dehydrated with a centrifuge, isolated, and dried at 105°C, thereby obtaining a nickel cobalt aluminum composite hydroxide 1.

The nickel-cobalt-aluminum composite hydroxide 1 and a lithium hydroxide monohydrate powder were weighed and mixed in proportions at which the mole ratio reached Li/(Ni + Co + Al) reached 1.03.

After that, the mixture was calcined at 650°C for 5 hours in an oxygen atmosphere, crushed with a millstone-type crusher, and further calcined at 760°C for 5 hours in the oxygen atmosphere. The calcined product was crushed again with the millstone-type crusher to obtain the powder of LiMO-1.

The obtained LiMO-1 and niobium oxide ($D_{50}$ = 1.30 $\mu$m), which was the compound containing the element X, were mixed in proportions at which the proportion of the mole amount of the element X in the total mole amount of metal elements other than Li in LiMO-1 became 5.1 mol%. A thermal treatment was performed at 500°C for 5 hours in an oxygen atmosphere, thereby obtaining CAM-1 having a composite phase containing Nb as the element X on the surface of the powder of LiMO containing Ni, Co, and Al.

2. Evaluation of CAM-1

As a result of the composition analysis of CAM-1, it was found that m = 0.03, n = 0.08, p = 0.09, the element M was Co, and the element X was Al and Nb.

The results of Cx, Cy, Cz, Cx/Cy, Cy/Cz, initial discharge capacity, and cycle retention rate of CAM-1 are shown in Tables 1 and 2.

<<Example 2>>

The same operation as in Example 1 was performed except that titanium oxide ($D_{50}$ = 2.5 $\mu$m) was used as the compound containing the element X and LiMO-1 and titanium oxide were mixed in proportions at which the proportion of the mole amount of the element X in the total mole amount of metal elements other than Li in LiMO-1 became 4.1 mol%.

A thermal treatment was performed at 500°C for 5 hours in an oxygen atmosphere, thereby obtaining CAM-2 having a composite phase containing Ti as the element X on the surface of the powder of LiMO- containing Ni, Co, and Al.

2. Evaluation of CAM-2

As a result of the composition analysis of CAM-2, it was found that m = 0.04, n = 0.07, p = 0.09, the element M was Co, and the element X was Al and Ti.

The results of Cx, Cy, Cz, Cx/Cy, Cy/Cz, initial discharge capacity, and cycle retention rate of CAM-2 are shown in Tables 1 and 2.

<<Example 3>>

The same operation as in Example 1 was performed except that ammonium dihydrogen phosphate ($D_{50}$ = 75.6 $\mu$m) was used as the compound containing the element X and LiMO-1 and ammonium dihydrogen phosphate were mixed in proportions at which the proportion of the mole amount of the element X in the total mole amount of metal elements other than Li in LiMO-1 became 4.4 mol%.

A thermal treatment was performed at 600°C for 5 hours in an oxygen atmosphere, thereby obtaining CAM-3 having a composite phase containing P as the element X on the surface of the powder of LiMO- containing Ni, Co, and Al.

2. Evaluation of CAM-3

As a result of the composition analysis of CAM-3, it was found that m = 0.03, n = 0.05, p = 0.09, the element M was Co, and the element X was Al and P.

The results of Cx, Cy, Cz, Cx/Cy, Cy/Cz, initial discharge capacity, and cycle retention rate of CAM-3 are shown in Tables 1 and 2.

<<Example 4>>

The same operation as in Example 1 was performed except that tungsten oxide ($D_{50}$ = 3.17 $\mu$m) was used as the compound containing the element X and LiMO-1 and tungsten oxide were mixed in proportions at which the proportion of the mole amount of the element X in the total mole amount of metal elements other than Li in LiMO-1 became 5.1 mol%.

A thermal treatment was performed at 500°C for 5 hours in an oxygen atmosphere, thereby obtaining CAM-4 having a composite phase containing W as the element X on the surface of the powder of LiMO containing Ni, Co, and Al.

2. Evaluation of CAM-4

As a result of the composition analysis of CAM-4, it was found that m = 0.03, n = 0.06, p = 0.09, the element M was Co, and the element X was Al and W.

The results of Cx, Cy, Cz, Cx/Cy, Cy/Cz, initial discharge capacity, and cycle retention rate of CAM-4 are shown in Tables 1 and 2.

<<Example 5>>

The same operation as in Example 1 was performed except that boric acid ($D_{50}$ = 16.3 $\mu$m) was used as the compound containing the element X and LiMO-1 and boric acid were mixed in proportions at which the proportion of the mole amount of the element X in the total mole amount of metal elements other than Li in LiMO-1 became 4.6 mol%.

A thermal treatment was performed at 400°C for 5 hours in an oxygen atmosphere, thereby obtaining CAM-5 having a composite phase containing B as the element X on the surface of the powder of LiMO- containing Ni, Co, and Al.

2. Evaluation of CAM-5

As a result of the composition analysis of CAM-5, it was found that m = 0.04, n = 0.06, p = 0.09, the element M was Co, and the element X was Al and B.

The results of Cx, Cy, Cz, Cx/Cy, Cy/Cz, initial discharge capacity, and cycle retention rate of CAM-5 are shown in Tables 1 and 2.

<<Example 6>>

The same operation as in Example 1 was performed except that alumina ($D_{50}$ = 3.5 $\mu$m) was used as the compound containing the element X and LiMO-1 and alumina were mixed in proportions at which the proportion of the mole amount of the element X in the total mole amount of metal elements other than Li in LiMO-1 became 5.1 mol%.

A thermal treatment was performed at 600°C for 5 hours in an oxygen atmosphere, thereby obtaining CAM-6 having a composite phase containing Al as the element X on the surface of the powder of LiMO- containing Ni, Co, and Al.

2. Evaluation of CAM-6

As a result of the composition analysis of CAM-6, it was found that m = -0.002, n = 0.07, p = 0.09, the element M was Co, and the element X was Al.

The results of Cx, Cy, Cz, Cx/Cy, Cy/Cz, initial discharge capacity, and cycle retention rate of CAM-6 are shown in Tables 1 and 2.

<<Example 7>>

The same operation as in Example 1 was performed except that titanium oxide ($D_{50}$ = 15.1 $\mu$m) was used as the compound containing the element X and LiMO-1 and titanium oxide were mixed in proportions at which the proportion of the mole amount of the element X in the total mole amount of metal elements other than Li in LiMO-1 became 1.1 mol%.

A thermal treatment was performed at 500°C for 5 hours in an oxygen atmosphere, thereby obtaining CAM-7 having a composite phase containing Ti as the element X on the surface of the powder of LiMO- containing Ni, Co, and Al.

2. Evaluation of CAM-7

As a result of the composition analysis of CAM-7, it was found that m = 0.04, n = 0.06, p = 0.09, the element M was Co, and the element X was Al and Ti.

The results of Cx, Cy, Cz, Cx/Cy, Cy/Cz, initial discharge capacity, and cycle retention rate of CAM-7 are shown in Tables 1 and 2.

<<Comparative Example 1>>

The same operation as in Example 1 was performed except that titanium oxide ($D_{50}$ = 2.53 $\mu$m) was used as the compound containing the element X and LiMO-1 and titanium oxide were mixed in proportions at which the proportion of the mole amount of the element X in the total mole amount of metal elements other than Li in LiMO-1 became 4.6 mol%.

A thermal treatment was performed at 700°C for 5 hours in an oxygen atmosphere, thereby obtaining CAM-8 having a composite phase containing Ti as the element X on the surface of the powder of LiMO- containing Ni, Co, and Al.

2. Evaluation of CAM-8

As a result of the composition analysis of CAM-8, it was found that m = 0.01, n = 0.07, p = 0.09, the element M was Co, and the element X was Al and Ti.

The results of Cx, Cy, Cz, Cx/Cy, Cy/Cz, initial discharge capacity, and cycle retention rate of CAM-8 are shown in Tables 1 and 2.

<<Comparative Example 2>>

The same operation as in Example 1 was performed except that niobium oxide ($D_{50}$ = 1.30 $\mu$m) was used as the compound containing the element X and LiMO-1 and niobium oxide were mixed in proportions at which the proportion of the mole amount of the element X in the total mole amount of metal elements other than Li in LiMO-1 became 6.1 mol%.

A thermal treatment was performed at 700°C for 5 hours in an oxygen atmosphere, thereby obtaining CAM-9 having a composite phase containing Nb as the element X on the surface of the powder of LiMO- containing Ni, Co, and Al.

2. Evaluation of CAM-9

As a result of the composition analysis of CAM-9, it was found that m = -0.04, n = 0.12, p = 0.09, the element M was Co, and the element X was Al and Nb.
The results of Cx, Cy, Cz, Cx/Cy, Cy/Cz, initial discharge capacity, and cycle retention rate of CAM-9 are shown in Tables 1 and 2.

<<Comparative Example 3>>

The same operation as in Example 1 was performed except that alumina (particle diameter $D_{50}$ = 3.5 $\mu$m) was used as the compound containing the element X and LiMO-1 and alumina were mixed in proportions at which the proportion of the mole amount of the element X in the total mole amount of metal elements other than Li in LiMO-1 became 8.5 mol%.
A thermal treatment was performed at 600°C for 5 hours in an oxygen atmosphere, thereby obtaining CAM-10 having a composite phase containing Al as the element X on the surface of the powder of LiMO-1 containing Ni, Co, and Al.

2. Evaluation of CAM-10

As a result of the composition analysis of CAM-10, it was found that m = -0.05, n = 0.12, p = 0.09, the element M was Co, and the element X was Al.
The results of Cx, Cy, Cz, Cx/Cy, Cy/Cz, initial discharge capacity, and cycle retention rate of CAM-10 are shown in Tables 1 and 2.

<<Example 8>>

The same operation as in Example 1 was performed except that magnesium oxide ($D_{50}$ = 0.1 $\mu$m) was used as the compound containing the element X and LiMO-1 and magnesium oxide were mixed in proportions at which the proportion of the mole amount of the element X in the total mole amount of metal elements other than Li in LiMO-1 became 4.7 mol%.
A thermal treatment was performed at 400°C for 5 hours in an oxygen atmosphere, thereby obtaining CAM-11 having a composite phase containing Mg as the element X on the surface of the powder of LiMO- containing Ni, Co, and Al.

2. Evaluation of CAM-11

As a result of the composition analysis of CAM-11, it was found that m = 0.04, n = 0.05, p = 0.09, the element M was Co, and the element X was Al and Mg.
The results of Cx, Cy, Cz, Cx/Cy, Cy/Cz, initial discharge capacity, and cycle retention rate of CAM-11 are shown in Tables 1 and 2.

<<Example 9>>

The same operation as in Example 1 was performed except that magnesium sulfate ($D_{50}$ = 1.9 $\mu$m) was used as the compound containing the element X and LiMO-1 and magnesium sulfate were mixed in proportions at which the proportion of the mole amount of the element X in the total mole amount of metal elements other than Li in LiMO-1 became 4.7 mol%.
A thermal treatment was performed at 400°C for 5 hours in an oxygen atmosphere, thereby obtaining CAM-12 having a composite phase containing Mg as the element X on the surface of the powder of LiMO-1 containing Ni, Co, and Al.

2. Evaluation of CAM-12

As a result of the composition analysis of CAM-12, it was found that m = 0.05, n = 0.04, p = 0.09, the element M was Co, and the element X was Al and Mg.
The results of Cx, Cy, Cz, Cx/Cy, Cy/Cz, initial discharge capacity, and cycle retention rate of CAM-12 are shown in Tables 1 and 2.

[Table 1]

| | Lithium metal composite oxide | Composite phase | Thermal treatment temperature | Proportion of mole amount of element X in total mole amount of metal elements other than Li in lithium metal composite oxide | $D_{50}$ of compound containing element X |
|---|---|---|---|---|---|
| | | | °C | mol% | μm |
| Example 1 | Ni, Co, Al | Nb | 500 | 5.1 | 1.3 |
| Example 2 | Ni, Co, Al | Ti | 500 | 4.1 | 2.5 |
| Example 3 | Ni, Co, Al | P | 600 | 4.4 | 75.6 |
| Example 4 | Ni, Co, Al | W | 500 | 5.1 | 3.2 |
| Example 5 | Ni, Co, Al | B | 400 | 4.6 | 16.3 |
| Example 6 | Ni, Co, Al | Al | 600 | 5.1 | 3.5 |
| Example 7 | Ni, Co, Al | Ti | 500 | 4.1 | 15.1 |
| Example 8 | Ni, Co, Al | Mg | 400 | 4.7 | 0.1 |
| Example 9 | Ni, Co, Al | Mg | 400 | 4.7 | 1.9 |
| Comparative Example 1 | Ni, Co, Al | Ti | 700 | 4.6 | 2.5 |
| Comparative Example 2 | Ni, Co, Al | Nb | 700 | 6.1 | 1.3 |
| Comparative Example 3 | Ni, Co, Al | Al | 600 | 8.5 | 3.5 |

[Table 2]

| | | [Li$_m$(Ni$_{(1-n-p)}$X$_n$M$_p$)$_{1-m}$] | | | BET specific surface area | Cx | Cy | Cz | Cx/Cy | Cy/Cz | Initial discharge capacity | Cycle retention rate |
|---|---|---|---|---|---|---|---|---|---|---|---|---|
| | | m | n | P | m$^2$/g | mass% | mass% | mass% | | | mAh/g | % |
| Example 1 | Nb | 0.03 | 0.08 | 0.09 | 0.8 | 33.7 | 32.6 | 0.14 | 1.0 | 233.0 | 178.0 | 90.4 |
| Example 2 | Ti | 0.04 | 0.07 | 0.09 | 1.0 | 40.2 | 4.5 | 0.14 | 9.0 | 31.8 | 160.9 | 79.0 |
| Example 3 | P | 0.03 | 0.05 | 0.09 | 0.3 | 6.6 | 36.6 | 0.23 | 0.2 | 159.2 | 184.3 | 84.8 |
| Example 4 | W | 0.03 | 0.06 | 0.09 | 0.4 | 42.3 | 39.9 | 0.12 | 1.1 | 332.3 | 185.3 | 81.3 |
| Example 5 | B | 0.04 | 0.06 | 0.09 | 0.3 | 57.3 | 22.1 | 0.11 | 2.6 | 200.5 | 182.4 | 80.8 |
| Example 6 | Al | -0.002 | 0.07 | 0.09 | 2.0 | 63.4 | 14.3 | 0.24 | 4.4 | 59.5 | 176.9 | 80.2 |
| Example 7 | Ti | 0.04 | 0.06 | 0.09 | 0.5 | 22.8 | 8.6 | 0.03 | 2.7 | 328.8 | 189.2 | 72.5 |
| Example 8 | Mg | 0.04 | 0.05 | 0.09 | 0.5 | 33.5 | 38.2 | 0.19 | 0.88 | 201.2 | 204.2 | 81.4 |
| Example 9 | Mg | 0.05 | 0.04 | 0.09 | 0.5 | 27.6 | 4.5 | 0.18 | 6.15 | 25.0 | 192.5 | 90.7 |
| Comparative Example 1 | Ti | 0.01 | 0.07 | 0.09 | 0.3 | 50.0 | 15.6 | 0.02 | 3.2 | 519.3 | 115.7 | 45.7 |
| Comparative Example 2 | Nb | -0.04 | 0.12 | 0.09 | 2.2 | 61.6 | 2.6 | 0.04 | 23.9 | 63.5 | 92.6 | 25.3 |
| Comparative Example 3 | Al | -0.05 | 0.12 | 0.09 | 4.8 | 66.7 | 4.5 | 0.05 | 15.0 | 88.3 | 155.3 | 87.6 |

[Reference Signs List]

1: Separator
2: Positive electrode
3: Negative electrode
4: Electrode group
5: Battery can
6: Electrolyte solution
7: Top insulator
8: Sealing body
10: Lithium secondary battery
21: Positive electrode lead
31: Negative electrode lead
100: Laminate
110: Positive electrode
111: Positive electrode active material layer
112: Positive electrode current collector
113: External terminal
120: Negative electrode
121: Negative electrode electrolyte layer
122: Negative electrode current collector
123: External terminal
130: Solid electrolyte layer
200: Exterior body
200a: Opening portion
1000: All-solid-state lithium-ion secondary battery

**Claims**

1. A positive electrode active material for a lithium secondary battery, comprising at least Li, Ni, an element X, and a carbon atom,

   wherein the element X is one or more elements selected from the group consisting of Al, Ti, Nb, B, W, Zr, Mg, Sn, and P, and (1) and (2) are satisfied,

$$(1)\ Cx/Cy \leq 10$$

$$(2)\ 0 < (Cy/Cz) \leq 100$$

   (in (1) or (2),
   Cx is an abundance (mass%) of the element X obtained by measurement using X-ray photoelectron spectroscopy,
   Cy is an abundance (mass%) of the carbon atom obtained from a C1s spectrum obtained by measurement using the X-ray photoelectron spectroscopy, and
   Cz is an abundance (mass%) of the carbon atom obtained by measurement using a combustion-infrared absorption method).

2. A positive electrode active material for a lithium secondary battery, comprising at least Li, Ni, an element X, and a carbon atom,

   wherein the element X is one or more elements selected from the group consisting of Al, Ti, Nb, B, W, Zr, Mg, Sn, and P, and (1) and (3) are satisfied,

$$(1) \; Cx/Cy \le 10$$

$$(3) \; 0 < (Cy/Cz) \le 500$$

(in (1) or (3),
Cx is an abundance (mass%) of the element X obtained by measurement using X-ray photoelectron spectroscopy,
Cy is an abundance (mass%) of the carbon atom obtained from a C1s spectrum obtained by measurement using the X-ray photoelectron spectroscopy, and
Cz is an abundance (mass%) of the carbon atom obtained by measurement using a combustion-infrared absorption method).

3. The positive electrode active material for the lithium secondary battery according to Claim 1 or 2, wherein the Cy is $0 < Cy \le 50$.

4. The positive electrode active material for the lithium secondary battery according to any one of Claims 1 to 3, wherein the Cz is $0 < Cz \le 2$.

5. The positive electrode active material for the lithium secondary battery according to any one of Claims 1 to 4, wherein the Cz is $0 < Cz \le 0.4$.

6. The positive electrode active material for the lithium secondary battery according to any one of Claims 1 to 5, wherein the Cx is $0 < Cx \le 95$.

7. The positive electrode active material for the lithium secondary battery according to any one of Claims 1 to 6, that is represented by composition formula (I) and further contains a carbon atom,

$$\text{Li[Li}_m\text{(Ni}_{(1-n-p)}\text{X}_n\text{M}_p)_{1-m}]\text{O}_2 \cdots \qquad \text{(I)}$$

(here, $-0.1 \le m \le 0.2$, $0 < p < 0.6$, $0 < n \le 0.2$ are satisfied, and an element M is one or more elements selected from the group consisting of Co, Mn, Fe, Cu, Mo, Zn, Ga, and V.)

8. The positive electrode active material for the lithium secondary battery according to any one of Claims 1 to 7, wherein the positive electrode active material for the lithium secondary battery contains a lithium metal composite oxide and a composite phase, the lithium metal composite oxide contains Li, Ni, and one or more elements selected from the group consisting of an element M and Al, and the composite phase contains the element X, where the element M is one or more elements selected from the group consisting of Co, Mn, Fe, Cu, Mo, Zn, Ga, and V.

9. The positive electrode active material for the lithium secondary battery according to any one of Claims 1 to 8, wherein a BET specific surface area is 2.0 m$^2$/g or less.

10. A positive electrode for the lithium secondary battery, comprising:
    the positive electrode active material for the lithium secondary battery according to any one of Claims 1 to 9.

11. A lithium secondary battery comprising:
    the positive electrode for the lithium secondary battery according to Claim 10.

12. A method for producing a positive electrode active material for a lithium secondary battery, comprising step (a), step (b), and step (c) in this order,

    step (a): a step of mixing and calcining a metal composite compound containing at least Ni and a lithium compound to obtain a lithium metal composite oxide,
    step (b): a step of mixing the lithium metal composite oxide and a compound containing an element X in proportions at which a proportion of a mole amount of the element X in a total mole amount of metal elements other than a lithium atom contained in the lithium metal composite oxide becomes 1.0 mol% or more and 5.5 mol% or less to obtain a mixture, where the element X is one or more elements selected from the group consisting of Al, Ti, Nb, B, W, Zr, Mg, Sn, and P, and a 50% cumulative volume particle diameter $D_{50}$ ($\mu$m) of the compound containing the element X is 0.02 $\mu$m or more and 90 $\mu$m or less, and

step (c): a step of thermally treating the mixture at a temperature of 200°C or higher and 600°C or lower in an oxygen-containing atmosphere.

13. The method for producing the positive electrode active material for the lithium secondary battery according to Claim 12,

wherein the step (a) has a step of mixing and calcining the metal composite compound and the lithium compound and crushing an obtained calcined product with a millstone-type crusher.

14. The method for producing the positive electrode active material for the lithium secondary battery according to Claim 12 or 13,

wherein the step (b) has a step of mixing a coating raw material containing the element X and the lithium metal composite oxide in an atmosphere containing water or water and carbon dioxide.

15. The method for producing the positive electrode active material for the lithium secondary battery according to any one of Claims 12 to 14,

wherein the step (b) has a step of mixing a coating raw material containing the element X and the lithium metal composite oxide and holding a mixture in an atmosphere containing water or water and carbon dioxide after the mixing.

FIG. 1A

FIG. 1B

## FIG. 2

## FIG. 3

**EP 4 203 105 A1**

## INTERNATIONAL SEARCH REPORT

International application No.

**PCT/JP2021/028730**

### A. CLASSIFICATION OF SUBJECT MATTER

*H01M 4/525*(2010.01)i; *H01M 4/36*(2006.01)i; *H01M 4/505*(2010.01)i
FI:  H01M4/525; H01M4/505; H01M4/36 A

According to International Patent Classification (IPC) or to both national classification and IPC

### B. FIELDS SEARCHED

Minimum documentation searched (classification system followed by classification symbols)

H01M4/525; H01M4/36; H01M4/505

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-37950 A (TOYOTA MOTOR CORP) 21 February 2013 (2013-02-21) | 1-15 |
| A | JP 2009-81130 A (MITSUBISHI CHEMICALS CORP) 16 April 2009 (2009-04-16) | 1-15 |
| A | JP 2019-21623 A (UMICORE) 07 February 2019 (2019-02-07) | 1-15 |
| A | WO 2014/185547 A1 (MITSUI MINING & SMELTING CO.,LTD) 20 November 2014 (2014-11-20) | 1-15 |
| A | JP 2014-238957 A (DOWA HOLDINGS CO LTD) 18 December 2014 (2014-12-18) | 1-15 |
| A | JP 2017-134996 A (SUMITOMO METAL MINING CO) 03 August 2017 (2017-08-03) | 1-15 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 October 2021** | **19 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

33

## INTERNATIONAL SEARCH REPORT
### Information on patent family members

International application No.

**PCT/JP2021/028730**

| Patent document cited in search report | | | Publication date (day/month/year) | Patent family member(s) | | | Publication date (day/month/year) |
|---|---|---|---|---|---|---|---|
| JP | 2013-37950 | A | 21 February 2013 | WO | 2013/022034 | A1 | |
| JP | 2009-81130 | A | 16 April 2009 | US | 2010/0209771 | A1 | |
| | | | | WO | 2009/031619 | A1 | |
| | | | | EP | 2202828 | A1 | |
| | | | | EP | 2466671 | A2 | |
| | | | | KR | 10-2010-0063041 | A | |
| | | | | CN | 101796672 | A | |
| | | | | CN | 102769130 | A | |
| JP | 2019-21623 | A | 07 February 2019 | US | 2019/0020019 | A1 | |
| | | | | US | 2019/0123347 | A1 | |
| | | | | EP | 3428124 | A1 | |
| | | | | CN | 109256533 | A | |
| | | | | KR | 10-2019-0008120 | A | |
| WO | 2014/185547 | A1 | 20 November 2014 | US | 2016/0111716 | A1 | |
| | | | | GB | 2528222 | A | |
| | | | | KR | 10-2016-0009015 | A | |
| JP | 2014-238957 | A | 18 December 2014 | (Family: none) | | | |
| JP | 2017-134996 | A | 03 August 2017 | (Family: none) | | | |

Form PCT/ISA/210 (patent family annex) (January 2015)

**EP 4 203 105 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020141233 A
- JP 2017134996 A
- JP 2002201028 A
- WO 2019098384 A1
- US 20200274158 A1
- JP 2000030686 A
- US 20090111025 A1
- JP 2004095400 A
- WO 2020208872 A1
- US 20160233510 A1
- US 20120251871 A1
- US 20180159169 A1
- US 20200259213 A1